# EUROPÄISCHE PATENTSCHRIFT

(11) **EP 2 537 638 B1**
(45) Veröffentlichungstag und Bekanntmachung des Hinweises auf die Patenterteilung: **27.11.2013**
(21) Anmeldenummer: 12170963.8
(22) Anmeldetag: 06.06.2012
(51) Int. Cl.: B25B 13/48, B29C 45/27

(54) **Materialrohr für eine Spritzgießdüse, Spritzgießdüse, Spritzgießdüsenanordnung und Spritzgießdüsenmontagewerkzeug**
Material tube for an injection moulding nozzle, injection moulding nozzle, injection moulding nozzle assembly and injection moulding nozzle assembly tool
Tuyau de matériau pour une buse de moulage par injection, buse de moulage par injection, agencement de buse de moulage par injection et outil de montage de buse de moulage par injection

(30) Priorität: 23.06.2011 DE 102011051292
(43) Veröffentlichungstag der Anmeldung: 26.12.2012
(73) Patentinhaber: GÜNTHER Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(56) Entgegenhaltungen:
- EP-A2- 1 844 915
- US-A- 5 542 321
- US-A- 6 079 971
- US-A1- 2007 006 690

## Beschreibung

Die Erfindung betrifft ein Materialrohr für eine Spritzgießdüse gemäß dem Oberbegriff von Anspruch 1, eine Spritzgießdüse nach Anspruch 10 sowie eine Spritzgießdüsenanordnung nach Anspruch 12. Die Erfindung betrifft ferner ein Materialrohr mit einem Werkzeug gemäß Anspruch 15 zur Montage/Demontage des Materialrohrs in einem Spritzgießwerkzeug.

Anordnungen von mehreren Spritzgießdüsen in einem Spritzgießwerkzeug, mit dem mehrere Angusspunkte gleichzeitig bedient werden können, sind allgemein bekannt. Sie werden beispielsweise dann verwendet, wenn eine komplexe Form an verschiedenen Stellen oder wenn viele kleine und dicht benachbarte Formnester gleichzeitig angespritzt werden sollen.

DE 20 2007 017 083 U1 sieht dazu beispielsweise eine Spritzgießdüse mit wenigstens zwei Materialrohren vor, die jeweils umfangsseitig eine Heizung tragen. Die Materialrohre dieser Düse sind in einem gemeinsamen Gehäuse angeordnet, wobei das Gehäuse zur Aufnahme eines jeden Materialrohres eine separate Ausnehmung hat. In diese Ausnehmungen wird jeweils eines der Materialrohre eingepresst.

Mit einer solchen Düse können zwar relativ kleine Nestabstände im Werkzeug realisiert werden. Das gleichzeitige Anspritzen sehr vieler Angusspunkte oder die getrennte Regelung bzw. Versorgung sehr vieler dicht benachbarter Anspritzpunkte ist jedoch oft problematisch. Insbesondere ist eine unabhängige Regelung der Temperatur der einzelnen Spritzgießdüsen nicht möglich. Weiterhin besteht bei Anordnung der Angusspunkte entlang einer kreis- oder ringförmigen Geometrie die Gefahr, dass die Düse instabil wird. Durch das Einpressen der Materialrohre ist es zudem nicht ohne weiteres möglich, einzelne Materialrohre im Falle eines Defekts oder zu Wartungszwecken auszutauschen. Dementsprechend muss stets die gesamte Düsenanordnung ausgewechselt werden, was sich ungünstig auf die Betriebs- und Herstellkosten auswirkt.

Um das Auswechseln eines Materialrohrs zu ermöglichen, wurden Spritzgießdüsen entwickelt, die ein Materialrohr aufweisen, das endseitig mit einem Schraubgewinde versehen ist. Mit diesem wird das Materialrohr in einen Verteiler, ein Düsengehäuse oder eine Düsenhalterung eingeschraubt. EP 1 369 217 A2 sieht dazu beispielsweise vor, dass das Materialrohr im Bereich einer Einlassöffnung einen Gewindeabschnitt aufweist, während das gegenüber liegende Ende im Bereich einer Auslassöffnung oder im Bereich einer darin eingesetzten Düsenspitze mit einer Werkzeugaufnahme versehen ist. Hierbei handelt es sich um einen Schraubenmutter-ähnlichen hexagonalen Abschnitt, an dem ein Werkzeug angesetzt werden kann, z.B. ein Maulschlüssel oder ein Steckschlüssel. Dadurch kann das Materialrohr mit dem Werkzeug in die Düsenhalterung ein- oder aus dieser herausgeschraubt werden.

Nachteilig hierbei ist jedoch, dass keine engen Abstände zwischen den Spritzgießdüsen realisiert werden können. Ebenso lassen sich die Düsen nicht in mehreren Reihen dicht an dicht hintereinander anordnen, weil der für den Eingriff des Werkzeugs an der Werkzeugaufnahme notwendige Platz nicht vorhanden ist. Enge Düsenabstände lassen sich daher nicht realisieren, insbesondere dann, wenn die Düsen in mehreren Reihen angeordnet sind. Ein weiterer Nachteil ist die Belastung der Spritzgießdüse, insbesondere des Materialrohrs, durch die Drehmomente beim Ein- oder Ausschrauben, wodurch das Materialrohr bzw. die Spritzgießdüse beschädigt oder verformt werden können. Solche Schäden sind oft nicht sofort erkennbar, sondern offenbaren sich meist erst unter dem sehr hohen Einspritzdruck während des Betriebs, bei dem dann z.B. Risse im Materialrohr auftreten können. Eine Verformung der Düse bzw. des Materialrohrs kann außerdem zur Kollision beim Einfahren der Spritzgießdüse in die Angussöffnung oder zu Undichtigkeiten zwischen der Spritzgießdüse und der Angussöffnung führen.

Bei einer in US 6 079 971 A offenbarten Spritzgießdüsenanordnung weist das Materialrohr der Spritzgießdüse ebenfalls endseitig im Bereich der Einlassöffnung einen Gewindeabschnitt auf, mit dem das Materialrohr in einen Verteiler eingeschraubt wird. Letzterer ist hierzu mit entsprechenden Gewindebohrungen versehen. Angrenzend an den Gewindeabschnitt ist am Außenumfang des Materialrohrs eine Werkzeugaufnahme in Form eines hexagonalen Abschnitts ausgebildet. Dieser weist in der Art einer Sechskantmutter ebene Seitenflächen auf, an denen ein Werkzeug, beispielsweise ein Maulschlüssel angreifen kann. Mit diesem kann das Materialrohr in den Verteiler ein- oder aus diesem herausgeschraubt werden.

Auch hierbei ist jedoch von Nachteil, dass mit solchen Spritzgießdüsen weder enge Abstände noch dichte Anordnungen der Düsen bzw. Materialrohre realisierbar sind, weil stets ein ausreichender Freiraum um die Werkzeugaufnahme herum für den Eingriff des Werkzeugs vorzusehen ist. Je nach Anordnung der einzelnen Spritzgießdüsen am Verteiler ist der Zugriff auf die Werkzeugaufnahme nur eingeschränkt möglich, was sich weiter ungünstig auf die Handhabung der Spritzgießdüsen auswirkt.

Ziel der Erfindung ist es, diese und weitere Nachteile des Standes der Technik zu vermeiden und ein Materialrohr für eine Spritzgießdüse zu schaffen, das mit einfachen Mitteln kostengünstig aufgebaut ist und mit dem innerhalb eines Spritzgießwerkzeugs sehr eng liegende Angusspunkte und/oder sehr geringe Nestabstände realisiert werden können, wobei einzelne Materialrohre unabhängig voneinander montierbar und demontierbar sind.

Darüber hinaus wird eine Spritzgießdüsenanordnung angestrebt, die wenigstens zwei, möglichst eng benachbarte Spritzgießdüsen aufweist. Sowohl die Spritzgießdüse als auch die Spritzgießdüsenanordnung sollen kostengünstig herstellbar und einfach in der Handhabung bei Montage und Wartung sein.

Hauptmerkmale der Erfindung sind im kennzeichnenden Teil von Anspruch 1, sowie in den Ansprüchen 10, 12 und 15 angegeben. Ausgestaltungen sind Gegenstand der Ansprüche 2 bis 9, 11, 13, 14 und 16.

Bei einem Materialrohr für eine Spritzgießdüse, mit einem zumindest abschnittsweise entlang einer Längsachse des Materialrohrs verlaufenden Strömungskanal, mit einer Einlassöffnung und einer Auslassöffnung für den Strömungskanal, mit einem im Bereich der Einlassöffnung ausgebildeten Befestigungsabschnitt zum Befestigen des Materialrohrs in einem Spritzgießwerkzeug, mit einer im Bereich der Einlassöffnung und des Befestigungsabschnitts ausgebildeten Werkzeugaufnahme zum Ansetzen eines Werkzeugs, und mit einem sich von der Werkzeugaufnahme bis zur Auslassöffnung erstreckenden Schaft, wobei der Schaft eine Umfangsfläche aufweist, sieht die Erfindung vor, dass die Werkzeugaufnahme wenigstens ein Mitnahmeelement und eine Außenumfangsfläche aufweist, und dass das Mitnahmeelement zumindest eine Kraftübertragungsfläche für das Werkzeug aufweist, wobei die Außenumfangsfläche der Werkzeugaufnahme in einem Abstand radial zur Umfangsfläche des Schafts angeordnet ist und wobei die Kraftübertragungsfläche des Mitnahmeelements im Bereich zwischen der Außenumfangsfläche der Werkzeugaufnahme und der Umfangsfläche des Schafts ausgebildet ist.

Dadurch ist es möglich, ein beispielsweise rohrförmiges Werkzeug axial auf den Schaft des Materialrohrs aufzuschieben und mit den Mitnahmeelementen und deren Kraftübertragungsflächen in Eingriff zu bringen, um das Materialrohr in dem Spritzgießwerkzeug zu montieren oder zu demontieren, ohne dass dabei das Werkzeug im Bereich des Materialrohrs radial über die Außenumfangsfläche der Werkzeugaufnahme hinausragt. Folglich ist es nicht notwendig, im Bereich der Werkzeugaufnahme seitlich überstehend mit dem Werkzeug an der Werkzeugaufnahme anzugreifen, um das Materialrohr um seine Längsachse zu drehen. Die Mitnahmeelemente der Werkzeugaufnahme und deren Kraftübertragungsflächen sind vielmehr derart am Außenumfang des Materialrohrs angeordnet, dass das Werkzeug von der Seite der Auslassöffnung her axial in Richtung der Längsachse des Materialrohrs auf dessen Schaft aufschiebbar und mit den Mitnahmeelementen in Eingriff bringbar ist.

Folglich kann das Werkzeug selbst dann betätigt und das Materialrohr an einer Düsenhalterung oder an einem Verteiler montiert oder demontiert werden, wenn die Materialrohre benachbarter Spritzgießdüsen in einem Spritzgießwerkzeug dicht an dicht nebeneinander angeordnet sind, wobei der minimale Abstand der einzelnen Düsen bzw. Materialrohre dem Außendurchmesser der Werkzeugaufnahme entsprechen kann. Ein seitlicher Zugang zur Montage oder Demontage des Materialrohrs im Bereich der Werkzeugaufnahme oder auch im Bereich des Befestigungsabschnitts oder des Schafts ist nicht erforderlich.

Darüber hinaus ermöglicht die erfindungsgemäße Ausgestaltung der Erfindung, dass jedes Materialrohr einzeln und individuell ausgebaut und eingebaut werden kann, selbst wenn mehrere Spritzgießdüsen in mehreren Reihen nebeneinander oder in einer Art Matrix angeordnet sind. Die Materialrohre lassen sich unabhängig voneinander einzeln austauschen, ohne dass Fixierungen der benachbarten Spritzgießdüsen gelöst oder demontiert werden müssen.

Die Ausbildung der Werkzeugaufnahme im Bereich der Einlassöffnung und des Befestigungsabschnitts hat den Vorteil, dass ein von dem Werkzeug über die Werkzeugaufnahme auf das Materialrohr ausgeübtes Drehmoment unmittelbar auf den Befestigungsabschnitt übertragen wird, ohne dass das Materialrohr oder dessen Schaft mechanisch belastet werden. Das Materialrohr wird mithin durch die montagebedingten Drehmomente auf der Länge seines Schaftes weder tordiert noch verbogen, wodurch es sich nicht verformen oder gar beschädigt werden kann.

Das Werkzeug kann vielmehr korrespondierend zu den Kraftübertragungsflächen derart gestaltet werden, dass ein optimales Drehmoment auf das Materialrohr aufgebracht werden kann, wodurch eine hohe Sicherheit gegen Leckage zwischen dem Materialrohr und der Düsenhalterung besteht. Überdies wird auch die Montage bzw. Demontage erleichtert, weil man außerhalb des Bereichs des Materialrohrs rasch und bequem an dem Werkzeug angreifen kann, indem beispielsweise axial über dem Materialrohr endseitig an dem Werkzeug eine Werkzeugaufnahme für ein herkömmliches Werkzeug vorgesehen ist.

Der Befestigungsabschnitt kann zum Beispiel als Gewindeabschnitt oder als Teil einer Bajonettverbindung ausgebildet sein. Er dient der lösbaren Fixierung des Materialrohrs an der Düsenhalterung oder dem Verteiler, wobei der Befestigungsabschnitt durch eine Drehbewegung um die Längsachse des Materialrohrs mit der Düsenhalterung bzw. dem Verteiler verbunden wird. Zur Übertragung des hierfür notwendigen Drehmoments dienen die Kraftübertragungsflächen des Mitnahmeelements der Werkzeugaufnahme, die so ausgebildet und ausgerichtet sind, dass ein Werkzeug innerhalb des Bereichs zwischen der Außenumfangsfläche der Werkzeugaufnahme und der Umfangsfläche des Schafts darin einoder angreifen kann, wenn das Werkzeug von der Seite der Auslassöffnung des Materialrohrs aus axial in Richtung der Längsachse des Materialrohrs auf den Schaft aufgeschoben wird.

Die Kraftübertragungsflächen sind derart ausgebildet, dass das von dem Werkzeug aufgebrachte Drehmoment optimal in die Werkzeugaufnahme und mithin in den Befestigungsabschnitt eingeleitet wird. Zudem sorgen die Kraftübertragungsflächen dafür, dass das Werkzeug beim Aufschieben auf den Schaft des Materialrohrs in die korrekte Position gebracht wird. Weil sowohl eine Eindrehbewegung als auch eine entgegengesetzte Ausdrehbewegung des Materialrohrs erfolgen soll, ist es von Vorteil, wenn gegenüberliegende Kraftübertragungsflächen eines Mitnahmeelements spiegelverkehrt zu einander ausgebildet sind. Je nachdem ob eine Eindreh- oder Ausdrehbewegung erfolgt, ist dann jeweils eine der gegenüberliegenden Kraftübertragungsflächen belastet.

Die Anzahl und die Größe der Mitnahmeelemente und der daran ausgebildeten Kraftübertragungsflächen kann in Abhängigkeit von dem auf das Materialrohr auszuübenden Drehmoment optimale gewählt werden, beispielsweise um eine stets dauerhaft zuverlässige Abdichtung des Materialrohrs gegenüber dem Spritzgießwerkzeug zu erreichen.

Die Gestaltung des Materialrohres mit den erfindungsgemäßen Mitnahmeelementen ist relativ einfach, was sich günstig auf die Herstellkosten auswirkt. Damit sind auch die Kosten für eine Spritzgießdüse mit einem solchen Materialrohr relativ gering. Letztlich gestaltet sich auch die Montage komfortabel und schnell, weil das Werkzeug nur einmal pro Spritzgießdüse in Eingriff zu bringen ist und anschließend rotiert werden kann.

Eine wichtige Ausgestaltung der Erfindung sieht vor, dass der Außendurchmesser der Werkzeugaufnahme größer ist als der Außendurchmesser des Schafts. Damit steht zwischen einander dicht benachbarten Materialrohren stets ein ausreichend großer Raum zur Verfügung, um das Werkzeug axial ansetzen und betätigen zu können und zwar selbst dann, wenn die Materialrohre mit ihren Werkzeugaufnahmen in mehreren Reihen oder in ein er Matrix dicht an dicht nebeneinander liegen. Weil das Werkzeug die Außenumfangsfläche der Werkzeugaufnahme radial nicht übersteigt, kann es stets rasch und bequem auf den Schaft aufgeschoben und mit den Kraftübertragungsflächen der Mitnahmeelemente in Eingriff gebracht werden. Ein seitlicher Zugriff auf die Werkzeugaufnahme ist nicht notwendig.

Die Erfindung sieht weiter vor, dass der Außendurchmesser des Befestigungsabschnitts kleiner ist als der Außendurchmesser des Schafts. Dadurch verbleibt in der Düsenhalterung oder dem Verteiler, in welchen die Materialrohre mit ihren Befestigungsabschnitten festgelegt werden stets ausreichend Material, um eine dauerhaft zuverlässige und stabile Fixierung der Materialrohre zu gewährleisten, selbst wenn die Materialrohre dicht an dicht nebeneinander angeordnet sind und die Befestigungsabschnitte als Gewindeabschnitte ausgebildet sind.

Bevorzugt ist der Befestigungsabschnitt zwischen der Einlassöffnung und der Werkzeugaufnahme ausgebildet. Dies hat den Vorteil, dass nicht nur die von dem Werkzeug auf das Materialrohr ausgeübten Drehmomente optimal auf die Kraftübertragungsflächen übertragen werden. Vielmehr bleibt der Schaft des Materialrohres von den Drehmomenten vollständig unbelastet, so dass keine Verformungen oder Beschädigungen am Materialrohr auftreten können.

Um mit dem Werkzeug stets zuverlässig an der Werkzeugaufnahme des Materialrohrs angreifen zu können, weist die Werkzeugaufnahme in einer weiteren Ausgestaltung der Erfindung zumindest eine Eingriffsausnehmung für das Werkzeug auf, wobei jede Eingriffsausnehmung axial über eine Eingriffsöffnung für das Werkzeug zugänglich ist. Zweckmäßig verlaufen die Eingriffsausnehmungen dabei parallel zur Längsachse des Materialrohrs, so dass das Werkzeug axial in die Eingriffsöffnungen eingeführt werden kann. Die Eingriffsausnehmung übernimmt dabei eine Führungsfunktion für das Werkzeug. Überdies ist vorgesehen, dass jede Eingriffsausnehmung von zumindest einer Kraftübertragungsfläche begrenzt ist, so dass im Bereich zwischen der Außenumfangsfläche der Werkzeugaufnahme und der Umfangsfläche des Schafts eine stets optimale Kraftübertragung gewährleistet ist und das Werkzeug an keiner Stelle radial über die Werkzeugaufnahme hinaus ragt.

In einer bevorzugten Ausführungsform der Erfindung sind die Eingriffsausnehmungen zwischen je zwei Mitnahmeelementen ausgebildet, wobei die Eingriffsausnehmungen als Nuten, Sicken, Vertiefungen oder Bohrungen ausgebildet sein können. Dies vereinfacht nicht nur die Herstellung des Materialrohrs, sondern auch dessen Handhabung, weil das axial anzusetzende Werkzeug stets zuverlässig mit den Mitnahmeelementen bzw. mit den Kraftübertragungsflächen in Kontakt gelangt. Die Mitnahmeelemente können radial von außen in die Umfangsflächen der Werkzeugaufnahme eingebracht sein. Alternativ ist es aber auch möglich, die Mitnahmeelemente in die Stirnseite der Werkzeugaufnahme einzuarbeiten. Wichtig ist nur, dass das Werkzeug axial mit den Mitnahmeelementen der Werkzeugaufnahme in Eingriff gebracht werden kann, um dann durch eine Drehbewegung in Umfangsrichtung eine Kraft auf die Kraftübertragungsflächen ausüben zu können.

Um eine ausreichende Kraftübertragung zu gewährleisten, sind die Ausnehmungen über den Umfang des Materialrohrs verteilt angeordnet. Darüber hinaus ist es möglich, die Kraftübertragungsflächen derart anzuordnen, dass jede Eingriffsausnehmung mit einem Hinterschnitt versehen ist. Durch einen solchen Hinterschnitt kann das eingeführte Werkzeug bei der Übertragung eines Drehmoments nicht aufbiegen und über die Mitnahmeelemente hinwegrutschen. Zudem ist es möglich, die Mitnahmeelemente mit relativ geringer Höhe auszubilden. Gleichermaßen kann damit auch das Werkzeug mit einem geringen Durchmesser ausgelegt werden. Auch hierdurch lassen sich mehrere Materialrohre sehr eng nebeneinander anordnen, so dass innerhalb des Spritzgießwerkzeug sehr eng benachbarte Angusspunkte realisiert werden können. Gleichzeitig ist es jedoch möglich, jedes Materialrohr unabhängig von benachbarten Materialrohren individuell zu montieren oder zu demontieren.

Die Kraftübertragungsflächen können bei Bedarf in einem Winkel zur Längsachse des Materialrohres liegen, so dass V-förmige Eingriffsausnehmungen für das Werkzeug entstehen. Dadurch wird der Eingriff des Werkzeugs in die Werkzeugaufnahme weiter erleichtert. Auch erreicht das Werkzeug stets einen guten Sitzt zwischen den Mitnahmeelementen und deren Kraftübertragungsflächen.

Eine Ausbildung der Mitnahmeelemente kann weiterhin vorsehen, dass diese in axialer Richtung länger sind als in radialer Richtung breit. Somit ergibt sich eine relativ große Kraftübertragungsfläche und es können relativ große Kräfte auch bei geringer Bauhöhe der Mitnahmeelemente übertragen werden.

Neben den Kraftübertragungsflächen kann ein Mitnahmeelement auch eine Anschlagfläche für das Werkzeug aufweisen, so dass dessen Eingriffstiefe definiert beschränkt ist.

Ferner kann auf Seiten der Einlassöffnung ein Dichtabschnitt vorgesehen sein, der in montiertem Zustand das Materialrohr relativ zu einer Düsenaufnahme abdichtet. Hierfür kann eine Passung oder ein Anschlag oder ein zusätzliches Dichtmittel, z.B. ein O-Ring, vorgesehen sein.

Die Erfindung betrifft weiterhin eine Spritzgießdüse mit einem erfindungsgemäßen Materialrohr und einer Heizvorrichtung. Letztere wird bevorzugt von der Seite der Auslassöffnung axial in Richtung der Längsachse auf das Materialrohr bzw. auf dessen Schaft aufgeschoben, nachdem das Materialrohr in der Spritzgießdüse montiert und das Werkzeug von dem Schaft des Materialrohrs abgezogen worden ist. Eine solche Heizvorrichtung ist mithin lösbar auf das Materialrohr aufgeschoben und wird zur Montage und Demontage des Materialrohrs von diesem abgenommen. Der dadurch frei werdende Umgebungsraum zwischen den benachbarten Spritzgießdüsen steht anschließend dem Montagewerkzeug zur Verfügung.

Weil die Heizvorrichtung bei der Montage des Materialrohrs dessen Rotationsbewegung nicht ausführen muss, ist neben dem Umgebungsraum zwischen den benachbarten Spritzgießdüsen kein zusätzlicher rotationssymmetrischer Freiraum um den Schaft des Materialrohrs herum für die Heizvorrichtung erforderlich. Dementsprechend kann man die Heizvorrichtung derart auslegen, dass sie einen nicht rotationssymmetrischen Querschnitt hat, der zumindest im in einem Teilbereich des Materialrohres die Außenumfangsfläche der Werkzeugaufnahme radial nicht überragt.

Dadurch lassen sich die Spritzgießdüsen relativ schlank gestalten und die Materialrohre dicht an dicht nebeneinander im Spritzgießwerkzeug anordnen, wobei der minimale Abstand zwischen zwei Materialrohren weiterhin dem Außendurchmesser der Werkzeugaufnahme entsprechen kann. Der zwischen zwei benachbarten Düsen vorhandene Freiraum jeder Düse entspricht im Wesentlichen dem radialen Abstand zwischen der Außenumfangsfläche der Werkzeugaufnahme und der Umfangsfläche des Schafts entspricht. Dieser Freiraum reicht aus, um entweder das Montagewerkzeug oder einen Teil der Heizvorrichtung aufzunehmen. Die Düsen können bei Bedarf jederzeit individuell montiert oder demontiert werden, selbst bei dichtester Packung der Materialrohre innerhalb des Spritzgießwerkzeugs, weil der Zugriff und die Betätigung des Werkzeugs von der Angussöffnung aus erfolgen kann.

Eine Variante der Erfindung sieht vor, dass die Heizvorrichtung aus einem Massivkörper und einem Heizelement besteht, wobei das Heizelement in einer ersten Ausnehmung des Massivkörpers angeordnet ist, und der Massivkörper eine zweite Ausnehmung aufweist, in der das Materialrohr aufgenommen wird. Ein solcher Massivkörper besteht aus einem gut wärmeleitfähigen Material, wie z.B. Kupfer. Die von dem Heizelement abgestrahlte Wärme wird dann sehr schnell und gleichmäßig im gesamten Massivkörper verteilt und von diesem auf das Materialrohr übertragen.

Weil jedes Materialrohr eine eigene Heizvorrichtung aufweist, ist eine unabhängige Ansteuerung der einzelnen Heizelemente möglich. Dadurch kann jede einzelne Düse hinsichtlich der Wärmemenge und der Wärmeverteilung individuell geregelt werden. Dies ist insbesondere deshalb wichtig, weil Spritzgießdüsen, die von weiteren Spritzgießdüsen umgeben sind, stärker erwärmen als solche die freistehend oder am Rand angeordnet sind. Mittels im Massivkörper angeordneter und vorzugsweise austauschbarer Temperaturfühler können die Temperaturen der einzelnen Düsen erfasst werden. Anhand dieser Daten kann eine Regeleinheit die einzelnen Heizvorrichtungen auf eine definierte Zieltemperatur regeln.

Die für die Heizvorrichtung und den Temperaturfühler notwendigen elektrischen Anschlüsse sollten auf der Seite der Werkzeugaufnahme aus dem Massivkörper herausgeführt sein. So können sie auf Seiten einer oberen Werkzeughälfte eines Spritzgießwerkzeugs weiter verlegt werden und stehen den beengten Platzverhältnissen zwischen mehreren Spritzgießdüsen nicht im Wege.

Eine sehr gute Temperaturverteilung einer fließfähigen Masse im Materialrohr wird dann erreicht, wenn der Massivkörper der Heizvorrichtung nicht nur über den Schaft, sondern auch über die Werkzeugaufnahme geschoben ist. Der Massivkörper ist dann relativ zum Materialrohr trotzdem frei drehbar, sofern die Mitnahmeelemente einen konstanten Außenradius haben. Somit wird das Materialrohr auf der Länge der Werkzeugaufnahme beheizt, indem die Wärmeübertragung über die Mitnahmeelemente erfolgt. Bei einer bevorzugten Ausbildung des Materialrohrs, bei dem der Durchmesser der Werkzeugaufnahme größer ist als der des Schafts, muss hierfür lediglich die zweite Ausnehmung im Massivkörper auf Seiten der Werkzeugaufnahme auf deren Durchmesser aufgeweitet sein.

Alternativ kann auch vorgesehen sein, dass die Heizvorrichtung als Dickschichtheizung ausgebildet ist. Eine solche kann beispielsweise auf einer auf das Materialrohr aufschiebbaren Hülse aufgebracht sein. Die aufschiebbare Hülse wäre ähnlich dem Massivkörper zur (De-)Montage vom Materialrohr herunter zu schieben, bevor ein Werkzeug auf das Materialrohr aufgeschoben und mit dessen Werkzeugaufnahme in Eingriff gebracht wird.

Eine weitere Ausgestaltung der Erfindung sieht vor, dass die Spritzgießdüse ein erfindungsgemäßes Materialrohr aufweist, auf dem eine Dickschichtheizung unmittelbar und nicht lösbar aufgebracht ist. Dann müssten die Durchmesser der Werkzeugaufnahme und des Materialrohrs inklusive der Dickschichtheizung so ausgelegt sein, dass das Werkzeug über die Dickschichtheizung aufschiebbar und mit der Werkzeugaufnahme in Eingriff bringbar ist. Solch eine unmittelbar aufgebrachte Dickschichtheizung wird bei einer (De-)Montage durch die Drehmomentaufbringung auf der Seite der Eingangsöffnung nicht durch eine Tordierung oder Verformung des Materialrohrs beschädigt.

In einer einfachen Ausgestaltung der Spritzgießdüse kann an der Auslassöffnung des Materialrohrs eine Düsenspitze angeordnet sein. Man kann die Düse aber auch offen gestalten oder als Nadelverschlussdüse ausbilden.

Weiterhin sieht die Erfindung eine Spritzgießdüsenanordnung für ein Spritzgießwerkzeug vor, mit einer Düsenhalterung, an der wenigstens eine erfindungsgemäße Spritzgießdüse mit einem erfindungsgemäßen Materialrohr angeordnet ist, wobei der Befestigungsabschnitt mit einem Befestigungsmittel der Düsenhalterung in Eingriff steht. Das Befestigungsmittel kann zum Beispiel ein Innengewinde oder ein Teil eines Bajonettverschlusses sein. Durch den Eingriff des Befestigungsabschnitts mit dem Befestigungsmittel sind die Spritzgießdüsen und die Düsenhalterung fest aber dennoch lösbar verbunden. Jede Spritzgießdüse kann einzeln ausgetauscht werden, ohne dass der Eingriff einer weiteren Spritzgießdüse gelöst werden muss.

Zusätzlich kann das Materialrohr auf der Seite der Einlassöffnung einen Dichtabschnitt aufweisen, der mit einem Dichtabschnitt der Düsenhalterung korrespondiert. Dies ist durch eine entsprechende Passung, eine Anschlagfläche oder ein zusätzliches Dichtmittel umsetzbar. Hierdurch wird ein Austreten der unter hohem Druck stehenden fließfähigen Masse zwischen den beiden Teilen verhindert.

Um eine dichte Anordnung der Spritzgießdüsen zu erlangen, ist weiter vorgesehen, dass der Abstand zwischen den Längsachsen zweier benachbarter Spritzgießdüsen im Wesentlichen gleich dem Außendurchmesser der Werkzeugaufnahme ist.

Besonders kommen die Vorteile des erfindungsgemäßen Materialrohrs und der so realisierbaren Spritzgießdüse zum tragen, wenn wenigstens drei Spritzgießdüsen gegeneinander versetzt angeordnet sind. Hier sind nunmehr besonders kleine Abstände zwischen den Spritzgießdüsen realisierbar. Für jede Spritzgießdüse kann stets ein gleichartiges Materialrohr eingesetzt werden, wodurch das Materialrohr preiswert herstellbar ist. Dazu kann eine aufschiebbare Heizvorrichtung entsprechend ihres umgebenden Freiraums individuell gestaltet sein.

Eine besondere Form der Spritzgießdüsenanordnung ergibt sich, wenn wenigstens drei Spritzgießdüsen in einer Reihenanordnung mit einer ersten Reihe und einer zweiten Reihe angeordnet sind, wobei vorzugsweise die Spritzgießdüsen der ersten Reihe versetzt zu den Spritzgießdüsen der zweiten Reihe angeordnet sind. Dabei können auch noch weitere Reihen mit Spritzgießdüsen vorgesehen sein, die jeweils zu ihrer benachbarten Reihe versetzt sind. Hierdurch ist eine maximale Dichte an Spritzgießdüsen pro Flächeneinheit realisierbar. Die Reihen können dabei auch bogenförmig sein. Sofern die Reihen so stark gebogen sind, dass sie auf sich selbst treffen, ergibt sich eine geschlossene Ringanordnung.

Die Spritzgießdüsen wären bei einer solchen Ringanordnung auf einem äußeren Ring und einem inneren Ring angeordnet, wobei die Spritzgießdüsen des äußeren Rings radial und in Umfangsrichtung U versetzt zu den Spritzgießdüsen des inneren Rings angeordnet sind.

Ein Vorteil diese Anordnung besteht darin, dass sich die Düsen des inneren und des äußeren Düsenringes über die Heizvorrichtungen berühren und so gegenseitig stabilisieren können. Dadurch ist es möglich, auch eine relativ große Anzahl an Spritzgießdüsen ringförmig mit sehr geringem Abstand zueinander anzuordnen. Insgesamt kann somit auch eine komplizierte oder sehr feine ringförmige Geometrie mit vielen dicht benachbarten Spritzgießdüsen ohne Probleme angespritzt werden. Dabei können die Spritzgießdüsen des inneren Ringes beispielsweise an ihren zum Zentrum des Ringes hin liegenden Kanten miteinander in Kontakt stehen, während die Düsen des äußeren Ringes wie Keile zwischen jeweils zwei benachbarten Düsen des inneren Ringes angeordnet sind. Die elektrischen Anschlüsse der äußeren und der inneren Spritzgießdüsen können alle sternförmig aus der Spritzgießdüsenanordnung herausgeführt werden. So sind für alle Spritzgießdüsen die Anschlüsse gleichermaßen gut zugänglich.

Je nach abzuspritzendem Werkstück kann so eine ideale Gestaltung der Spritzgießdüsenanordnung mit der erforderlichen Anzahl an Spritzgießdüsen pro Flächeneinheit bereitgestellt werden. Spritzgießdüsenanordnungen mit zehn, sechzehn oder mehr Spritzgießdüsen sind problemlos realisierbar. Zieht man eine Heizvorrichtung von einer Spritzgießdüse ab, kann das Werkzeug axial auf den nun freiliegenden Schaft aufgeschoben und das Materialrohr aus der Düsenhalterung oder dem Verteiler ausgeschraubt werden. Die Spritzgießdüsen der erfindungsgemäßen Anordnung können mithin jederzeit einzeln und individuell ausgetauscht werden.

Um eine möglichst hohe Dichte an Spritzgießdüsen pro Flächeneinheit zu realisieren, kann vorgesehen sein, dass die Heizvorrichtung Seitenwände hat, wobei die Seitenwände benachbarter Spritzgießdüsen einander formangepasst sind. Insbesondere sind die Seitenwände dem Massivkörper der Heizeinrichtung zugeordnet. Somit kann der um die Materialrohre bestehende Freiraum weitestgehend ausgenutzt werden, um eine möglichst gleichmäßige und dennoch individuelle Beheizung der einzelnen Spritzgießdüsen vornehmen zu können. Bei einem regelmäßigen Muster der Spritzgießdüsenanordnung können bestimmte Massivkörpertypen mehrmals verbaut werden, was die Kosten gering hält. Bei einer Ringanordnung sind zum Beispiel Massivkörper mit einem keil- oder flaschenförmigen Querschnitt sehr gut geeignet, um eine enge Verschachtelung der Spritzgießdüsen zu ermöglichen. Unregelmäßige Anordnungen können jedoch auch eine individuelle Ausgestaltung jedes Massivkörpers erfordern. Sofern sich die benachbarten Spritzgießdüsen tangieren, stützen sich diese gegenseitig.

Die Vorteile des erfindungsgemäßen Materialrohrs und der damit realisierbaren Spritzgießdüse werden insbesondere dann ausgeschöpft, wenn ein Werkzeug zur Montage oder Demontage eines Materialrohrs an einer Düsenhalterung einer Spritzgießdüsenanordnung vorgesehen ist, das einen Eingriffsabschnitt für den Eingriff des Werkzeugs in die Mitnahmeelemente der Werkzeugaufnahme am Materialrohr, einen Betätigungsabschnitt zum Ausüben eines Drehmoments auf das Werkzeug und einen zwischen dem Eingriffabschnitt und dem Betätigungsabschnitt angeordneten rohrförmigen Werkzeugschaft hat, wobei der Innendurchmesser des Werkzeugschafts bis auf ein geringes Bewegungsspiel dem Schaft-Außendurchmesser des Materialrohrs entspricht, während der Außendurchmesser des Eingriffabschnitts und der Außendurchmesser des Werkzeugschafts kleiner oder gleich dem Außendurchmesser der Werkzeugaufnahme am Materialrohr sind.

Ein solches Werkzeug benötigt somit für die Montage oder Demontage des erfindungsgemäßen Materialrohrs keinen seitlichen Zugang zur Spritzgießdüse, sondern dieses ist von der Auslassöffnung her axial in Richtung der Längsachse des Materialrohrs auf dieses aufschiebbar und mit den Mitnahmeelementen in Eingriff bringbar. Hierdurch ist um jedes Materialrohr nur ein derart großer radialer Freiraum notwendig, dass das Werkzeug aufgeschoben werden kann. Dieser kann sich schon alleine durch das Abziehen einer Heizvorrichtung vom Materialrohr ergeben. Außerdem ergibt sich mit dem erfindungsgemäßen Spritzgießdüsenmontagewerkzeug eine komfortable Betätigung, da das Werkzeug bei der Montage nicht abgesetzt werden muss.

Eine Ausbildung des Spritzgießdüsenmontagewerkzeugs sieht vor, dass der Eingriffabschnitt Eingriffelemente aufweist, die den Werkzeugschaft axial fortsetzen und mit den Mitnahmeelementen der Werkzeugaufnahme am Materialrohr korrespondieren. Im einfachsten Falle können die Eingriffelemente einteilig mit dem Werkzeugschaft ausgebildet sein, was stabil ist und zu geringen Kosten führt. Auch die Eingriffelemente weisen Kraftübertragungsflächen auf, welche mit den Kraftübertragungsflächen der Mitnahmeelemente korrespondieren. Um die Eingriffelemente axial mit den Mitnahmeelementen in Eingriff zu bringen, sind zwischen den Eingriffelementen idealer Weise Schlitze angeordnet, wobei die Schlitze in von dem Werkzeugschaft wegweisender Richtung offen sind.

Zu bevorzugen ist ein Spritzgießdüsenmontagewerkzeug, bei dem der Durchmesser des Eingriffabschnitts kleiner ist als der Durchmesser des Werkzeugschafts, oder bei dem der Durchmesser des Eingriffabschnitts gleich dem Durchmesser des Werkzeugschafts ist. Dies betrifft insbesondere den Außendurchmesser, denn der Innendurchmesser ist bevorzugt gleich groß. Der notwendige Durchmesser des Werkzeugschafts bestimmt sich durch das verwendete Material und die auftretenden Biege- und Drehmomente während der Montage. Durch eine solche Ausbildung mit einem minimalen Durchmesser des Werkzeugschafts, wird der notwendige freie Umgebungsraum um das Materialrohr minimiert. Da das Spritzgießdüsenmontagewerkzeug sehr schlank ist dieses selbst auf sehr eng zueinander angeordnete Materialrohre aufschiebbar.

Der Betätigungsabschnitt kann derart gestaltet sein, dass er eine Aufnahme für ein Standardwerkzeug bildet. Zu bevorzugen ist eine Aufnahme für einen Gabel- oder Ringschlüssel oder eine Schraubnuss. Diese sind auch standardisiert als Drehmomentschlüssel verfügbar, was ein besonders sicheres und komfortables Eindrehen des Materialrohrs in die Düsenaufnahme ermöglicht. In der Praxis kann so sichergestellt werden, dass jedes Materialrohr mit einem definierten Drehmoment eingedreht wird. Leckagen zwischen einem Materialrohr und einer Düsenhalterung werden so wirksam vermieden.

Alternativ könnte jedoch auch vorgesehen sein, dass das Spritzgießdüsenmontagewerkzeug eine T-Form hat, deren oberer Querbalken besonders bevorzugt ergonomisch für eine ein- und/oder zweihändige Betätigung geformt ist. Somit wäre kein zusätzliches Standardwerkzeug erforderlich. Eine Drehmomenteinrichtung ist dabei ebenfalls vorsehbar.

Zu einem schlanken Spritzgießdüsenmontagewerkzeug kann auch eine Gestaltung derart führen, dass der Durchmesser des Eingriffabschnitts kleiner ist als der Durchmesser der Werkzeugaufnahme, oder dass der Durchmesser des Eingriffabschnitts gleich dem Durchmesser der Werkzeugaufnahme ist. Ein Spritzgießdüsenmontagewerkzeug, bei dem der Durchmesser des Eingriffabschnitts kleiner oder gleich groß ist wie der Durchmesser der Werkzeugaufnahme, erfordert keinen zusätzlichen Freiraum für die Werkzeugaufnahme. Diese kann in montiertem Zustand sogar in der Ausnehmung der Düsenhalterung versenkt sein und trotzdem kann der Eingriffabschnitt mit der Werkzeugaufnahme in Eingriff gebracht werden. Dies ermöglicht eine Heizvorrichtung, die bis zur Düsenhalterung reicht, wodurch eine sehr gute Wärmeverteilung im gesamten Materialrohr erreicht wird.

Besonders zu bevorzugen ist eine Gestaltung des Spritzgießdüsenmontagewerkzeugs, bei welcher der Durchmesser des Werkzeugschafts und der Durchmesser des Eingriffabschnitts kleiner sind als der maximale Durchmesser des Materialrohrs. Da das Materialrohr in seine Position geführt oder aus dieser heraus bewegt werden muss, ist der minimale notwendige Freiraum um das Materialrohr durch dieses selbst bestimmt. Gemäß der Gestaltung des Spritzgießdüsenmontagewerkzeugs ist jedoch kein zusätzlicher Freiraum für das Spritzgießdüsenmontagewerkzeug vorzusehen und ein minimaler Abstand zwischen den Spritzgießdüsen und somit den Angussöffnungen realisierbar.

Die Länge des Werkzeugschafts sollte wenigstens so groß sein wie die Länge des Schafts des Materialrohres. Dadurch steht der Betätigungsabschnitt bei einem Eingriff des Eingriffabschnitts mit der Werkzeugaufnahme über das Materialrohr hinaus und ist zugänglich für eine Betätigung. Außerdem kann der Betätigungsabschnitt einen größeren Durchmesser haben als der Werkzeugschaft, wodurch der Durchmesser auf geeignete Standardwerkzeuge auslegbar ist. Der Betätigungsabschnitt könnte jedoch auch einen Betätigungsgriff aufweisen.

Die Erfindung betrifft auch die Verwendung eines erfindungsgemäßen Werkzeugs zur Montage eines erfindungsgemäßen Materialrohrs.

Ein mit einer erfindungsgemäßen Spritzgießdüsenanordnung ausgestaltetes Spritzgießwerkzeug sollte über einen balancierten Verteiler verfügen, um die Spritzgießdüsen homogen mit einer fließfähigen Masse versorgen zu können. Der Verteiler kann dabei voll- oder teilweise balanciert sein. Geeignet ist beispielsweise ein Verteiler, der wenigstens zwei Umlenkebenen aufweist. Auf diese Weise können -je nach gewünschter Anordnung und Anzahl der Düsen und nach gewünschter Balancierung der Schmelze - auch ungewöhnliche Anzahlen von Düsen in der Spritzgießanordnung realisiert und mit stets gleichen Mengen von Schmelze versorgt werden. Der Verteiler würde dann auf der den Spritzgießdüsen gegenüber liegenden Seite der Düsenhalterung angeordnet sein. Dabei kann die Düsenhalterung einen Teil des Verteilers bilden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine teilmontierte Schrägansicht einer Spritzgießdüsenanordnung mit einer in einer Düsenhalterung montierten Spritzgießdüse mit einem erfindungsgemäßen Materialrohr und einer darauf aufgesetzten Heizvorrichtung;
- Fig. 2: eine Schrägansicht des Materialrohr der Spritzgießdüse von Fig. 1 ohne die Heizvorrichtung;
- Fig. 3: eine Schnittansicht des Materialrohrs von Fig. 2;
- Fig. 4.: eine Schrägansicht eines Werkzeugs zur Montage eines Materialrohrs;
- Fig. 5: eine Schrägansicht einer Spritzgießdüsenanordnung;
- Fig. 6: eine Schnittansicht der Spritzgießdüsenanordnung von Fig. 5; und
- Fig. 7: einen Teil-Querschnitt durch drei versetzt zueinander angeordnete Massivkörper von drei nebeneinander liegenden Heizvorrichtungen.

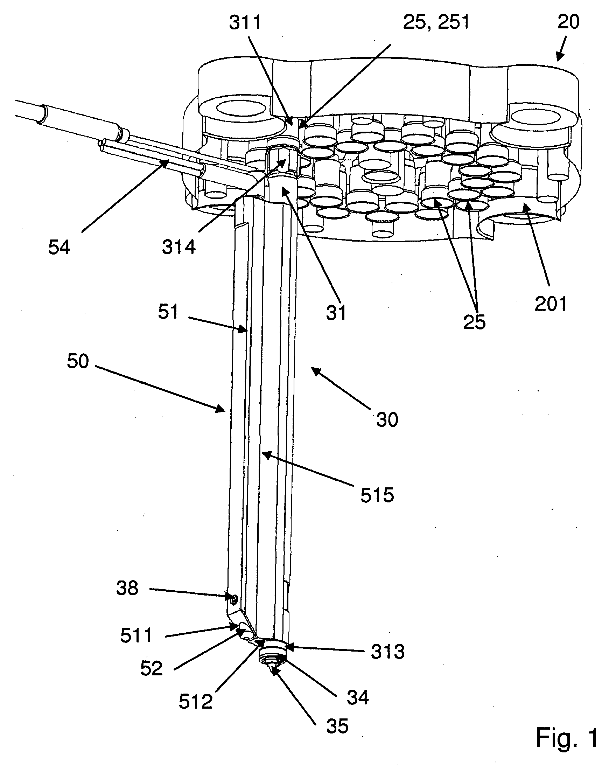

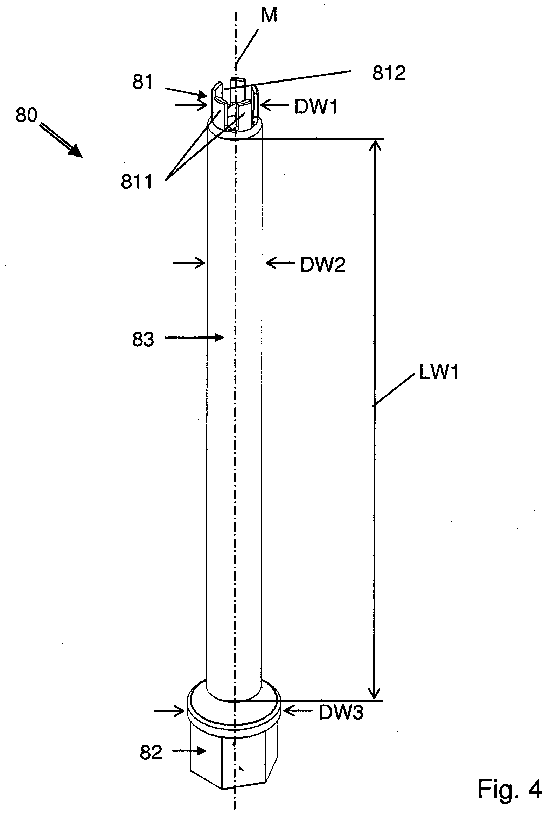

Die in Fig. 1 gezeigte Spritzgießdüsenanordnung ist für den Einsatz in einem Spritzgießwerkzeug vorgesehen. Sie hat eine Düsenhalterung 20, die an einer (nicht dargestellten) Verteilerplatte montiert oder mit einer (ebenfalls nicht gezeigten) Verteilerdüse verbunden wird. In der Düsenhalterung 20 sind auf der Unterseite 201 mehrere Spritzgießdüsen 30 angeordnet, wobei zur besseren Übersicht in Fig. 1 zunächst nur eine solche Düse dargestellt ist. Jede Spritzgießdüse 30 hat ein Materialrohr 31 sowie eine Heizvorrichtung 50, die lösbar auf das Materialrohr 31 aufgeschoben ist. Für die Festlegung der Materialrohre 31 sind in der Düsenhalterung 20 Ausnehmungen 25 vorgesehen. Innerhalb jeder Ausnehmung 25 ist ein Befestigungsmittel 251 für das Materialrohr 31 ausgebildet, beispielweise ein Innengewinde oder der Teil eines Bajonettverschlusses, so dass das Materialrohr 31 mittels eines in Fig. 4 dargestellten Werkzeugs 80 und durch eine Drehbewegung in die Düsenhalterung 20 eingeschraubt werden kann.

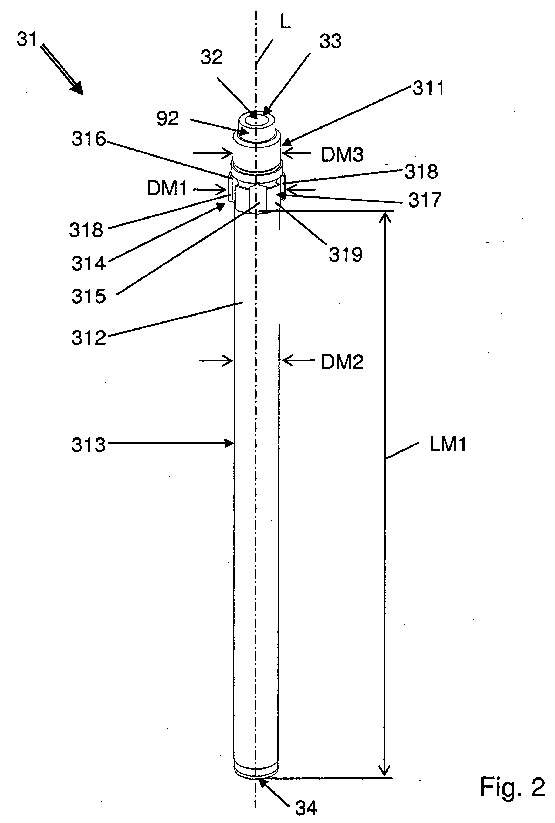

Jedes Materialrohr 31 ist - wie Fig. 2 näher zeigt - im Wesentlichen rohrförmig ausgebildet. Es hat einen zumindest abschnittsweise entlang einer Längsachse L des Materialrohrs 31 verlaufenden Strömungskanal 32, der über eine Einlassöffnung 33 und eine Auslassöffnung 34 zugänglich ist. Sowohl die Einlassöffnung 33 als auch die Auslassöffnung 34 sind bevorzugt stirnseitig im Materialrohr 31 ausgebildet. Sie können aber-je nach Ausführungsform der Spritzgießvorrichtung oder der Spritzgießdüse 30 - auch seitlich angeordnet sein.

Im Bereich der Einlassöffnung 33 weist das Materialrohr 31 einen Befestigungsabschnitt 311 auf, der bei der Montage des Materialrohrs 31 in eine der Ausnehmungen 25 in der Düsenhalterung 20 eingreift und dabei mit dem darin ausgebildeten Befestigungsmittel 251 zusammenwirkt. Der Befestigungsabschnitt 311 ist daher bevorzugt ein zu dem Innengewinde passendes Außengewinde oder ein korrespondierender Teil des Bajonettverschlusses.

Zur Einlassöffnung 33 hin weist das Materialrohr 31 einen Dichtabschnitt 92 auf, der in montierter Position des Materialrohres 31 in einen korrespondierenden (nicht dargestellten) Sitz innerhalb der Düsenhalterung 20 eingreift. Die (nicht näher bezeichnete) äußere Mantelfläche des Dichtabschnitts 92 dient dabei der Zentrierung des Materialrohrs 31 innerhalb der Ausnehmung 25, während die eigentliche Dichtwirkung auf der Stirnfläche des Dichtabschnitts 92 erzielt wird. Hierfür wird der Dichtabschnitt 92 mit seiner Stirnfläche gegen eine gegenüberliegende Fläche des Sitzes innerhalb der Düsenhalterung 20 gepresst.

Im Bereich des Befestigungsabschnitts 311 ist koaxial zur Längachse L eine Werkzeugaufnahme 314 zum Ansetzen eines Werkzeugs 80 ausgebildet, wobei der Befestigungsabschnitt 311 zwischen der Einlassöffnung 33 und der Werkzeugaufnahme 314 liegt. Zwischen der Werkzeugaufnahme 314 und der Auslassöffnung 34 erstreckt sich ein Schaft 313, der auf einer Länge LM1 eine zylindrische Umfangsfläche 312 aufweist.

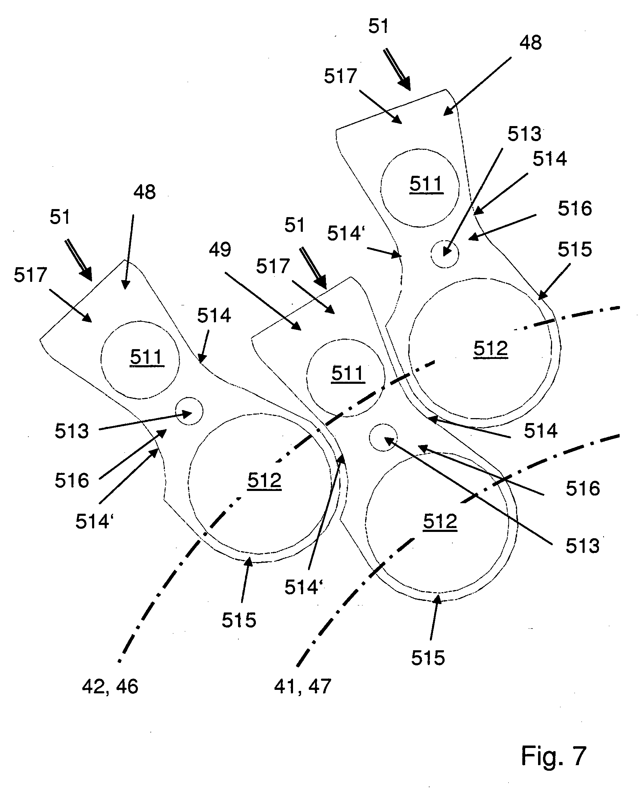

Die im Wesentlichen länglich ausgebildete Heizvorrichtung 50 wird von der Seite der Auslassöffnung 34 her axial in Richtung der Längsachse L auf den Schaft 313 des Materialrohrs 31 aufgeschoben. Sie hat dazu einen länglichen Massivkörper 51, der mit zwei Ausnehmungen 511, 512 versehen ist, die beide parallel zur Längsachse L des Materialrohres 31 verlaufen. Innerhalb der ersten Ausnehmung 511 ist ein im Wesentlichen zylindrisches Heizelement 52 eingesetzt, während die zweite benachbarte Ausnehmung das Materialrohr 31 aufnimmt (siehe dazu auch Fig. 7). Insbesondere der Schaft 313 des Materialrohrs 31 liegt weitestgehend innerhalb der zweiten Ausnehmung 512. Mit seinem freien Ende, in das die Auslassöffnung 34 eingebracht ist, ragt das Materialrohr 31 geringfügig aus der zweiten Ausnehmung 512 des Massivkörpers 51 heraus. Dort ist axial eine Düsenspitze 35 in das Materialrohr 31 eingesetzt, die mit einer (nicht bezeichneten) Düsenaustrittsöffnung versehen ist, so dass das zu verarbeitende Material durch den Strömungskanal 32 des Materialrohrs 31 hindurch bis in ein Formnest geleitet werden kann.

Wie Fig. 7 weiter zeigt, hat jeder Massivkörper 51 der Heizvorrichtung 50 eine an die Außendurchmesser des Materialrohres 31 und der Heizvorrichtung 50 angepasste Seitenwand 514, 514', wobei der Durchmesser der ersten Ausnehmung 511 für das Heizelement 52 kleiner ist als der Durchmesser der zweiten Ausnehmung 512 für das Materialrohr 31. Dadurch kann der Massivkörper 51 auf der Seite des Heizelements 52 bzw. auf der Seite der ersten Ausnehmung 511 verjüngt ausgebildet sein.

Die Position des Heizelements 52 relativ zum Massivkörpers 51 wird beispielsweise mit Hilfe einer Schraube 38 festgelegt, beispielsweise einer (nicht näher bezeichneten) Madenschraube, die von außen in den Massivkörper 51 eingeschraubt wird und innen derart gegen das eingesetzte Heizelement 52 drückt, dass dieses innerhalb des Massivkörpers 51 verklemmt ist. Man kann das Heizelement 52 aber auch auf eine andere Art im Massivkörper 51 festlegen, z.B. mit einem Klemm- oder Rastelement oder durch Einpressen in die Ausnehmung 511.

Unterhalb der Düsenhalterung 20 ragt das Heizelement 52 ein Stück weit aus der ersten Ausnehmung 511 heraus. Es weist dort einen elektrischen Anschluss 54 auf, der seitlich und/oder radial herausgeführt wird. Auch das Materialrohr 31 ragt unterhalb der Düsenhalterung 20 mit seiner Werkzeugaufnahme 314 und dem Befestigungsabschnitt 311 aus der zweiten Ausnehmung 512 des Massivkörpers 51 hinaus.

Weil sich die Werkzeugaufnahme 314 in unmittelbarer Nähe zum Befestigungsabschnitt 311 befindet, wird das Materialrohr 31 bzw. dessen Schaft 313 beim Einschrauben in die Düsenhalterung 20 mit dem Werkzeug 80 nicht auf seiner vollen Länge belastet oder gar tordiert. Außerdem kann der Massivkörper 51 relativ eng anliegend auf das Materialrohr 31 aufgeschoben werden, nachdem dieses mit der Düsenhalterung 20 in Eingriff gebracht worden ist. Das Materialrohr 31 ist mithin von der Seite der Auslassöffnung 34 her stets zugänglich und demontierbar. Durch eine Schraub- oder Bajonettverbindung lässt sich eine besonders hohe Dichtigkeit zwischen dem Materialrohr 31 und der Düsenhalterung 20 erzielen, die auch nach wiederholter Demontage nicht nachlässt.

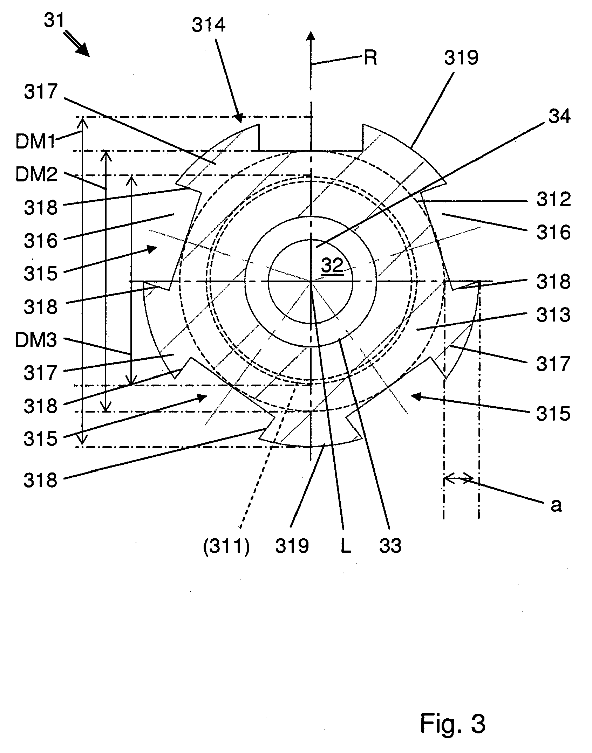

Die Werkzeugaufnahme 314 weist - wie insbesondere die Fig. 3 näher zeigt - fünf Mitnahmeelemente 317 auf, die in gleichmäßigen Abständen über den Umfang des Materialrohres 31 verteilt angeordnet sind und sich in Radialrichtung R nach außen erstrecken. Zwischen zwei Mitnahmeelementen 317 ist jeweils eine Eingriffsausnehmung 315 für das Werkzeug 80 ausgebildet, wobei jede Eingriffsausnehmung 315 in Umfangsrichtung von jeweils zwei Kraftübertragungsflächen 318 begrenzt ist, die parallel zueinander ausgerichtet sind und Angriffsflächen für das Werkzeug 80 bilden.

Die äußere Begrenzung der Werkzeugaufnahme 314 und - in diesem Ausführungsbeispiel - auch die äußere Begrenzung der Mitnahmeelemente 317 wird von einer Außenumfangsfläche 319 gebildet, die - unterbrochen von den fünf Eingriffsausnehmungen 315 für das Werkzeug 80 - im Wesentlichen zylindrisch ausgebildet ist. Die Eingriffsausnehmungen 315 sind beispielsweise seitlich in die Außenumfangsfläche 319 eingebrachte Nuten, die axial über je eine Eingriffsöffnung 316 für das Werkzeug 80 zugänglich sind und die in Axialrichtung korrespondierende Eingriffelemente 811 des Werkzeugs 80 aufnehmen.

Man erkennt in den Fig. 2 und 3, dass die Werkzeugaufnahme 314 mit ihren Mitnahmeelementen 317 und den dazwischen ausgebildeten Eingriffsausnehmungen 315 einen etwa sternförmigen Flanschrand bildet, der mit seiner Außenumfangsfläche 319 über die Umfangsfläche 312 des Schafts 313 vorsteht, wobei der Außendurchmesser DM1 der Werkzeugaufnahme 314 größer ist als der Außendurchmesser DM2 des Schafts 313. Dementsprechend liegt die Außenumfangsfläche 319 der Werkzeugaufnahme 314 in einem radialen Abstand a zur Umfangsfläche 312 des Schafts 31 und die Kraftübertragungsflächen 318 der Mitnahmeelemente 317 liegen stets im Bereich zwischen der Außenumfangsfläche 319 der Werkzeugaufnahme 314 und der Umfangsfläche 312 des Schafts 313. Dies hat zur Folge, dass das Werkzeug 80 mit seinen Eingriffelementen 811 von der Auslassöffnung 34 her axial in die Eingriffsöffnungen 316 der Eingriffsausnehmungen 315 eingreifen kann, ohne dabei den Außendurchmesser DM1 der Werkzeugaufnahme 314 zu überschreiten.

Der maximale Durchmesser des Materialrohres 31, einschließlich des darauf aufgesetzten Werkzeugs 80, ist mithin nicht größer als der Außendurchmesser DM1 der Werkzeugaufnahme 314, was wiederum zur Folge hat, dass die Materialrohre 31 innerhalb der Düsenhalterung 20 in einem Abstand angeordnet werden können, der dem Außendurchmesser DM1 der Werkzeugaufnahme 314 entspricht. Die Materialrohre 31 können mithin dicht an dicht nebeneinander in der Düsenhalterung 20 angeordnet werden.

Wie Fig. 3 weiter zeigt, ist der Außendurchmesser DM3 des Befestigungsabschnitts 311 kleiner als der Außendurchmesser DM2 des Schafts 313, so dass - selbst wenn man die Materialrohre 31 in einem minimalen Abstand anordnet, der dem Außendurchmesser DM1 der Werkzeugaufnahme 314 entspricht - zwischen den Ausnehmungen 25 in der Düsenhalterung 20 stets noch ausreichend Material verbleibt, um die Befestigungsmittel 251 ausbilden zu können.

Setzt man das Werkzeug 80 axial auf das Materialrohr 31 auf und dreht man das Werkzeug 80 um die Längsachse L des Materialrohres 31 wird auf die Kraftübertragungsflächen 318 der Mitnahmeelemente 317 ein Drehmoment ausgeübt und das Materialrohr 31 kann -je nach Drehrichtung - mit seinem Befestigungsabschnitt 311 in die Ausnehmung 25 der Düsenhalterung 20 eingeschraubt oder ausgeschraubt werden.

Die Eingriffsausnehmungen 315 können jeweils mit einem (nicht gezeigten) Hinterschnitt versehen sein, indem die innerhalb einer Eingriffsausnehmung 315 einander gegenüber liegenden Kraftübertragungsflächen 319 in einem Winkel zueinander ausgerichtet werden. Ein solcher Hinterschnitt ermöglicht einen minimalen Durchmesser DM1 der Werkzeugaufnahme 314, weil so ein Abrutschen, bzw. Überrutschen durch das Werkzeug 80 verhindert werden kann. Damit ist auch der maximale Durchmesser des Materialrohres 31 sehr gering. Folglich können mit mehreren dicht an dicht nebeneinander angeordneten Materialrohren 31 extrem enge Nestabstände bzw. Angussabstände realisiert werden.

Die Mitnahmeelemente 317 und die Eingriffsausnehmungen 316 können im Querschnitt senkrecht zur Längsachse L rechteckig oder trapezförmig ausgebildet sein. Optional könnten an den Mitnahmeelementen 317 (nicht dargestellte) Einführschrägen vorgesehen sein, um ein zugehöriges Werkzeug möglichst schnell und komfortabel mit der Werkzeugaufnahme 314 in Eingriff bringen zu können.

Ein zur Montage oder zur Demontage eines erfindungsgemäßen Materialrohrs 31 geeignetes Werkzeug 80 ist in Fig. 4 gezeigt. Dieses hat einen Eingriffsabschnitt 81 für den Eingriff des Werkzeugs 80 in die Mitnahmeelemente 317 bzw. in die Eingriffsausnehmungen 315 der Werkzeugaufnahme 314 am Materialrohr 31, sowie einen Betätigungsabschnitt 82 zum Ausüben eines Drehmoments auf das Werkzeug 80. Zwischen dem Eingriffabschnitt 81 und dem Betätigungsabschnitt 82 ist ein rohrförmiger Werkzeugschaft 83 ausgebildet, dessen Innendurchmesser lW2 bis auf ein geringes Bewegungsspiel dem Schaft-Außendurchmesser DM2 des Materialrohrs 31 entspricht, während der Außendurchmesser DW1 des Eingriffabschnitts 81 und der Außendurchmesser DW2 des Werkzeugschafts 83 kleiner oder gleich dem Außendurchmesser DM1 der Werkzeugaufnahme 314 am Materialrohr 31 sind.

Der Eingriffabschnitt 81 trägt endseitig die Eingriffelemente 811, die den Werkzeugschaft 83 axial fortsetzen und dazu geeignet sind, mit den Mitnahmeelementen 317 der Werkzeugaufnahme 314 am Materialrohr 31 zu korrespondieren. Dafür sind zwischen den Eingriffelementen 811 Schlitze 812 ausgebildet, die in von dem Werkzeugschaft 83 wegweisender Richtung offen sind. In der gezeigten Darstellung ist der Durchmesser DW1 des Eingriffabschnitts 81 kleiner als der Durchmesser DW2 des Werkzeugschafts 83. Im vorliegenden Ausführungsbeispiel sind - entsprechend der Anzahl an Mitnahmeelementen 317 - fünf Eingriffelemente 811 vorgesehen, es sind jedoch andere Anzahlen an Mitnahmeelementen 317 und Eingriffelementen 811 vorsehbar. Letztere sind dazu geeignet, in die Werkzeugaufnahme 314 einzugreifen, um auf das Materialrohr 31 ein Drehmoment ausüben zu können.

Zur Betätigung des Werkzeugs 80 bildet der Betätigungsabschnitt 82 eine Aufnahme für ein Standardwerkzeug. Beispielsweise hat der Betätigungsabschnitt einen hexagonalen Umfang, dessen Zentrum auf der Mittelachse M liegt. Auf diesen ist sowohl ein Ring- oder Gabelschlüssel, als auch die Nuss eines Steckschlüssels aufsetzbar.

Die Länge LW1 des Werkzeugschafts 83 ist wenigstens so groß wie die Länge LM1 des Materialrohrschafts 313, so dass der Betätigungsabschnitt 82 beim Eingriff des Eingriffabschnitts 81 in die Werkzeugaufnahme 314 über das Materialrohr 31 hinaus steht und für eine Betätigung zugänglich ist. Das verwendete Standardwerkzeug kann dabei auch nicht mit den benachbarten Düsen kollidieren, was die Handhabung weiter vereinfacht. Ein seitlicher Zugang zum Materialrohr 31 ist für die Montage oder Demontage nicht erforderlich. Außerdem kann der Betätigungsabschnitt 82 einen Durchmesser DW3 haben, der größer ist als der Durchmesser DW2 des Werkzeugschafts, wodurch der Durchmesser DW3 auf geeignete Standardwerkzeuge auslegbar ist oder auch einen eigenen Betätigungsgriff aufweisen könnte (nicht abgebildet).

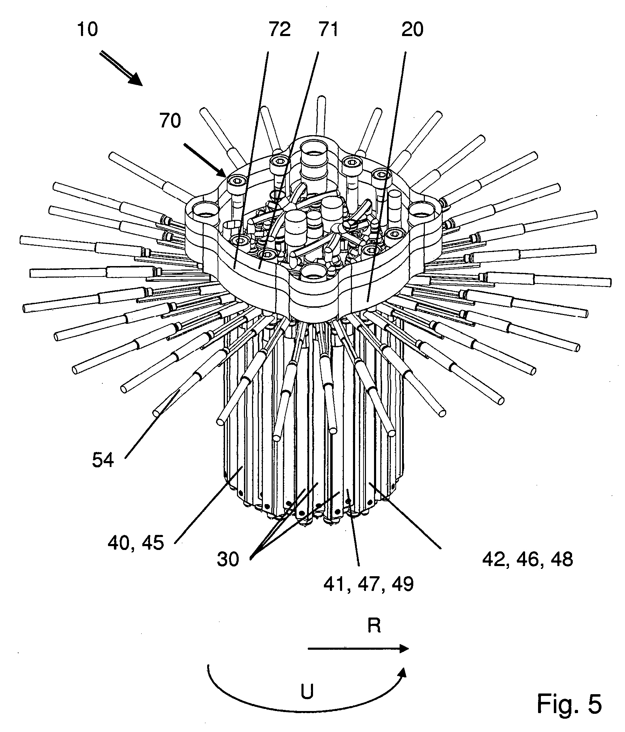

Fig. 5 zeigt eine isometrische Ansicht einer Spritzgießdüsenanordnung 10 mit Ringform. Hierfür sind in einer Reihenanordnung 40 in einer ersten Reihe 41 fünfzehn Spritzgießdüsen 30 angeordnet, wobei die erste Reihe 41 bogenförmig einen inneren Ring 47 bildet. Die auf dem inneren Ring 47 angeordneten Spritzgießdüsen 30 werden im Folgenden als innere Düsen 49 bezeichnet. Zudem sind in der Reihenanordnung 40 in einer zweiten Reihe 42 ebenfalls fünfzehn Spritzgießdüsen 30 angeordnet, wobei die zweite Reihe 42 bogenförmig einen äußeren Ring 46 bildet. Die auf dem äußeren Ring 46 angeordneten Spritzgießdüsen 30 werden im Folgenden äußere Düsen 48 genannt. Durch den inneren Ring 47 und den äußeren Ring 46 ergibt sich eine Ringanordnung 45.

Um die Spritzgießdüsen 30 möglichst eng an einander anordnen zu können, sind die Spritzgießdüsen 30 der ersten Reihe 41, nämlich die inneren Düsen 49, versetzt zu den Spritzgießdüsen 30 der zweiten Reihe 42, dementsprechend den äußeren Düsen 48, angeordnet. Insbesondere sind die äußeren Düsen 48 sowohl in radialer Richtung R, als auch in Umfangsrichtung U zu den inneren Düsen 49 versetzt. Zudem sind die Seitenwände 514, 514' der benachbarten Spritzgießdüsen 30 einander formangepasst. Hierfür sind lediglich äußere Düsen 48 mit einer ersten Querschnittsform und innere Düsen 49 mit einer zweiten Querschnittsform notwendig. Beide Querschnittsformen sind bevorzugt im Wesentlichen keil- oder flaschenförmig ausgebildet. Es besteht allerdings auch die Möglichkeit die inneren und äußeren Düsen 48, 49 baugleich mit einer Querschnittsform zu gestalten.

Jedes einzelne Materialrohr 31 der Spritzgießdüsen 30 steht mit seinem Befestigungsabschnitt 311 mit der gemeinsamen Düsenhalterung 20 in Eingriff. Auf Seiten des Befestigungsabschnitts 311 weist jede Spritzgießdüse 30 einen elektrischen Anschluss 54 auf. Diese ragen sternförmig aus der Spritzgießdüsenanordnung 10 heraus, sodass jeder einzelne zugängig ist und auch einfach der entsprechenden Spritzgießdüse 30 zuordenbar ist. Bei einer Demontage muss keiner der elektrischen Anschlüsse 54 aufwendig gesucht werden. Die Heizvorrichtung 50 kann vielmehr samt dem zugehörigen elektrischen Anschluss 54 nach unten herausgezogen werden, ohne dass dieser verhakt, kollidiert oder ähnliches. Anschließend kann mit dem Werkzeug 80 das zugehörige Materialrohr 31 aus der Düsenhalterung 20 ausgeschraubt werden.

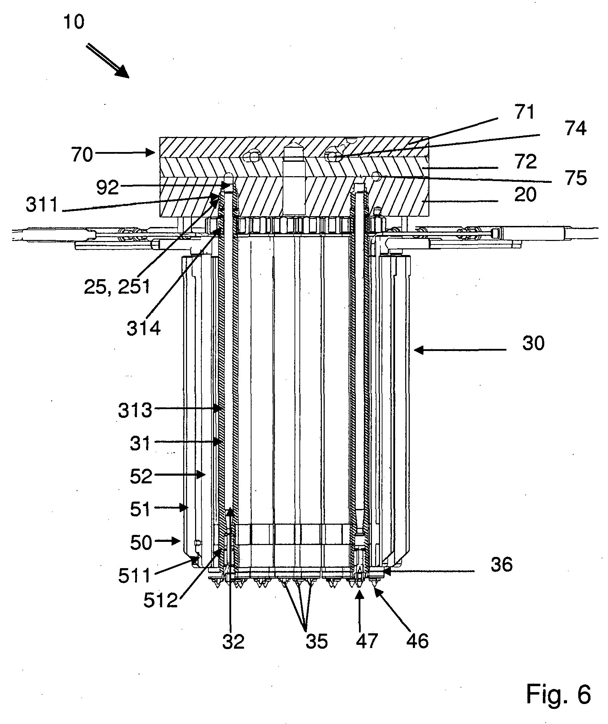

Auf der den Spritzgießdüsen 30 abgewandten Seite der Düsenhalterung 20 sind - wie in Fig. 6 gezeigt - eine erste Verteilerplatte 71 und eine zweite Verteilerplatte 72 angeordnet. Gemeinsam bilden diese zusammen mit der Düsenhalterung 20 einen Verteiler 70, mittels dem jeder Spritzgießdüse 30 eine fließfähige Masse zugeführt werden kann. Idealer Weise ist der Verteiler 70 balanciert, damit jeder Spritzgießdüse 30 in gleichen Zeiteinheiten die gleiche Menge an fließfähiger Masse mit möglichst gleicher Temperatur und somit gleicher Konsistenz zugeführt wird. Die fließfähige Masse wird hierbei an zwei Umlenkebenen 74, 75 umgelenkt, wobei die erste Umlenkebene 74 durch Kanäle zwischen der ersten Verteilerplatte 71 und der zweiten Verteilerplatte 72 ausgebildet ist, und die zweite Umlenkebene 75 zwischen der zweiten Verteilerplatte 72 und der Düsenhalterung 20 ausgebildet ist.

In den Verteilerplatten 71, 72 und der Düsenhalterung 20 sind hierzu jeweils mehrere Stichbohrungen und Kanalfräsungen ausgebildet. Die Kanalfräsungen sind jeweils zwischen den Verteilerplatten 71, 72 bzw. der zweiten Verteilerplatte 72 und der Düsenhalterung 20 vorhanden und bilden die Umlenkebenen 74, 75. Die Stichbohrungen der ersten Verteilerplatte 71 führen die Schmelze aus einer Hauptangussöffnung zu verschiedenen Verteilerpunkten der ersten Umlenkebene 74. Von dort wird die Schmelze durch die Kanalfräsungen der ersten Umlenkebene 74 auf verschiedene in der zweiten Verteilerplatte 72 ausgebildete Stichbohrungen aufgeteilt. Durch diese Stichbohrungen gelangt die Schmelze zu weiteren Verteilerpunkten der zweiten Umlenkebene 75. Hier wird sie wiederum durch Kanalfräsungen zu Stichbohrungen geleitete, die in der Düsenhalterung 20 ausgebildet sind und in die Strömungskanäle 32 der Materialrohre 31 der Spritzgießdüsenanordnung 10 münden. Die Stichbohrungen bilden mithin ebenfalls einen inneren Ring 47 und einen äußeren Ring 46. Eine solche Ringanordnung ist selbstredend nicht auf zwei Ringe beschränkt, sondern kann auch weitere Ringe aufweisen.

Fig. 6 stellt einen Schnitt durch eine Spritzgießdüsenanordnung 10 mit Ringform dar.

Hierfür sind in einer Reihenanordnung in einer ersten Reihe fünfzehn Spritzgießdüsen 30 angeordnet (sichtbar sind davon nur etwa die Hälfte), wobei die erste Reihe bogenförmig einen inneren Ring 47 bildet. Die auf dem inneren Ring 47 angeordneten Spritzgießdüsen 30 werden im Folgenden als innere Düsen bezeichnet. Zudem sind in der Reihenanordnung in einer zweiten Reihe ebenfalls fünfzehn Spritzgießdüsen 30 angeordnet (erkennbar sind davon nur etwa die Hälfte anhand der zugehörigen Düsenspitzen 35), wobei die zweite Reihe bogenförmig einen äußeren Ring 46 bildet. Die auf dem äußeren Ring 46 angeordneten Spritzgießdüsen 30 werden im Folgenden äußere Düsen genannt. Durch den inneren Ring 47 und den äußeren Ring 46 ergibt sich eine Ringanordnung.

Um die Spritzgießdüsen 30 möglichst eng an einander anordnen zu können, sind die Spritzgießdüsen 30 des inneren Rings 47, nämlich die inneren Düsen, versetzt zu den Spritzgießdüsen 30 des äußeren Rings 46, dementsprechend den äußeren Düsen, angeordnet. Insbesondere sind die äußeren Düsen sowohl in radialer Richtung, als auch in Umfangsrichtung zu den inneren Düsen versetzt. Zudem sind die Seitenwände der benachbarten Spritzgießdüsen 30 einander formangepasst.

Jede Spritzgießdüse 30 besteht im Wesentlichen aus einem Materialrohr 31, einer Heizvorrichtung 50, einer Düsenspitze 35 und wenigstens einem (nicht gezeigten) Temperaturfühler. Das Materialrohr 31 ist rohrförmig und bildet einen Strömungskanal 32 mit einer Einlassöffnung und einer Auslassöffnung. Es weist auf der Seite der Einlassöffnung eine Werkzeugaufnahme 314, sowie zwischen der Werkzeugaufnahme 314 und der Einlassöffnung einen Befestigungsabschnitt 311 auf, der insbesondere als Gewindeabschnitt ausgebildet ist. Letztlich erstreckt sich von der Werkzeugaufnahme 314 bis zur Auslassöffnung ein Schaft 313.

Die Heizvorrichtung 50 ist von der Seite der Auslassöffnung axial in Richtung der Längsachse L des Materialrohrs 31 auf dieses lösbar aufgeschoben. Sie besteht aus einem Massivkörper 51 mit zwei Ausnehmungen 511, 512. Innerhalb der ersten Ausnehmung 511 ist ein Heizelement 52 und innerhalb der zweiten Ausnehmung das Materialrohr 31 angeordnet. Vor allem der Schaft 313 des Materialrohrs 31 liegt weitestgehend innerhalb der zweiten Ausnehmung 512. Mit der Seite der Auslassöffnung ragt das Materialrohr 31 geringfügig aus der zweiten Ausnehmung 512 heraus. Hier ist zudem die Düsenspitze 35 in das Materialrohr 31 eingesetzt. Zusätzlich können in dem Massivkörper 51 die Temperaturfühler eingebracht sein, wozu eine dritte Ausnehmung 513 vorgesehen ist.

Um zu verhindern, dass die Heizvorrichtung 50 nach unten von dem Materialrohr 31 abrutschen kann, ist am unteren Ende des Materialrohres 31 außerdem ein Sicherungsring 36 angebracht. Der Sicherungsring 36 kann wie dargestellt ein separates Bauteil sein, das auf das untere Ende des Materialrohres 31 aufgeschraubt wird. Sofern dieser Sicherungsring 36 aus einem thermisch schlecht leitenden Material gefertigt ist, kann er das Materialrohr 31 in einer Ausnehmung abstützen und/oder zentrieren und thermisch gegen diese Ausnehmung isolieren. Vorstellbar ist aber auch, dass der Sicherungsring 36 ein flanschförmiger vorspringender Teil einer in das Materialrohr 31 eingesetzten lösbaren Düsenspitze 35 ist.

Die einzelnen Materialrohre 31 der Spritzgießdüsen 30 stehen mit ihren Befestigungsabschnitten 311 mit einer einzigen gemeinsamen Düsenhalterung 20 in Eingriff, die mit entsprechenden Ausnehmungen 25 und darin ausgebildeten Befestigungsmittel 251 versehen ist. Auf der Seite der Einlassöffnung 33 weist das Materialrohr 31 noch einen Dichtabschnitt 92 auf, der mit einem Dichtsitz der Düsenhalterung 20 korrespondiert. Zudem hat jede Spritzgießdüse 30 auf dieser Seite elektrische Anschlüsse für das Heizelement 52 und die Temperaturfühler.

Fig. 7 zeigt einen Querschnitt durch drei versetzt zueinander angeordnete Massivkörper 51 einer Heizvorrichtung 50. Man erkennt, dass die Massivkörper 51 und somit auch zugehörige Spritzgießdüsen durch eine besondere Ausbildung ihres Querschnittes sehr dicht aneinander angeordnet werden können. Hierfür kann zwischen drei Bereichen des Massivkörpers 51 differenziert werden. Der erste ist ein nahezu kreisrunder und hohler Bereich, der als Materialrohrhülle 515 eine zweite Ausnehmung 512 zur Aufnahme eines Materialrohrs umgibt. Dieser Bereich dient auch der gleichmäßigen Erwärmung des Materialrohrs, wofür die Wärme möglichst gleichmäßig von allen Seiten auf das Materialrohr übertragen werden sollte. Deshalb ist die Wandstärke nahezu konstant.

Ein zweiter Bereich bildet eine Heizelementaufnahme 517 mit einer ersten Ausnehmung 511, die der Aufnahme eines Heizelements dient. Der Dritte Bereich ist ein Verbindungsstück 516 zwischen der Materialrohrhülle 515 und der Heizelementaufnahme 517 und weist eine dritte Ausnehmung 513 auf. In die dritte Ausnehmung 513 kann ein Temperaturfühler eingesetzt werden, oder aber die Ausnehmung 513 wird dazu eingesetzt die Wärmeverteilung in der Materialrohrhülle 515 gleichmäßiger zu gestalten, indem sie den Wärmefluss gezielt nach außen in den radialen Umfang der Materialrohrhülle 515 leitet.

Dabei ist die Heizelementaufnahme 517 auf der dem Verbindungsstück 516 abgewandten Seite relativ dickwandig, da die Wärme hier nicht abfließen soll. Seitlich hingegen bildet die Heizelementaufnahme 517 und das Verbindungsstück 516 gemeinsam eine konkave erste Seitenwand 514 und eine gegenüberliegende konkave zweite Seitenwand 514'. Diese Seitenwände 514, 514' sind an einen versetzt benachbarten Massivkörper 51 angepasst, insbesondere an den Radius von dessen Materialrohrhülle 515. Somit kann der benachbarte Massivkörper 51 in der konkaven Seitenwand 514, 514' gedreht werden und die Massivkörper 51 möglichst dicht aneinander angeordnet werden.

Um eine verbesserte gegenseitige Stützung der Massivkörper 51 zu erreichen, können die Seitenwände 514, 514' unterschiedlich gestaltet sein. Somit kann auf einer Seite eine größere Kontaktfläche bereitgestellt werden, wodurch sich die Massivkörper 51 stützen und auch zueinander ausrichten.

Die drei Massivkörper 51 sind derart zueinander versetzt, dass einer von diesen auf einer ersten Reihe 41 angeordnet ist und die anderen zwei auf einer zweiten Reihe 42. Anhand der Ausrichtung der drei Massivkörper 51 ist erkennbar, dass die Reihen 41, 42 nicht gradlinig, sondern bogenförmig sind. Durch ein Hinzufügen weiterer Massivkörper 51 würde die erste Reihe 41 einen inneren Ring 47 bilden und die zweite Reihe 42 einen äußeren Ring 46. Dementsprechend wären die Massivkörper 51 auf dem äußeren Ring 42 äußeren Düsen 48 zuzuordnen und die Massivkörper 51 auf dem inneren Ring 47 inneren Düsen 49.

Die Erfindung ist nicht auf eine der vorbeschriebenen Ausführungsformen beschränkt, sondern in vielfältiger Weise abwandelbar. So können die Mitnahmeelemente 317 der Werkzeugaufnahme 314 in Form von Axialbohrungen ausgebildet sein. Oder man verwendet axiale Vertiefungen oder Erhebungen, die stirnseitig an der Werkzeugaufnahme 314 ausgebildet sind. Wichtig ist, dass die Mitnahmeelemente 317 derart ausgestaltet sind, dass das Werkzeug 80 von der Seite der Auslassöffnung 34 aus axial in Richtung der Längsachse L des Materialrohrs 31 auf dieses aufschiebbar und mit den Mitnahmeelementen 315 in Eingriff bringbar ist, ohne dass das Werkzeug über die Außenumfangsfläche 319 der Werkzeugaufnahme 314 hinaus übersteht.

Man erkennt, dass bei einem Materialrohr 31 für eine Spritzgießdüse 30, das rohrförmig ist und einen Strömungskanal 32 mit einer Einlassöffnung 33 und einer Auslassöffnung 34 ausbildet, und das auf der Seite der Einlassöffnung 33 eine Werkzeugaufnahme 314, sowie zwischen der Werkzeugaufnahme 314 und der Einlassöffnung 33 einen Befestigungsabschnitt 311 aufweist, wobei sich von der Werkzeugaufnahme 314 bis zur Auslassöffnung 34 ein Schaft 313 erstreckt, vorgesehen ist, dass die Werkzeugaufnahme 314 am Umfang des Materialrohrs 31 angeordnete Mitnahmeelemente 317 hat, die derart ausgestaltet sind, dass ein Montagewerkzeug 80 für das Materialrohr 31 von der Seite der Auslassöffnung 34 axial in Richtung einer Längsachse L des Materialrohrs 31 auf dieses aufschiebbar und mit den Mitnahmeelementen 315 in Eingriff bringbar ist, ohne dass das Werkzeug über die Außenabmessungen des Materialrohrs 31 hinaus übersteht.

**Bezugszeichenliste**

| | | | |
|---|---|---|---|
| 10 | Spritzgießdüsenanordnung | 46 | Äußerer Ring |
| 20 | Düsenhalterung | 47 | Innerer Ring |
| 201 | Unterseite | 48 | Äußere Düse |
| 25 | Ausnehmung | 49 | Innere Düse |
| 251 | Befestigungsmittel | 50 | Heizvorrichtung |
| | | 51 | Massivkörper |
| 30 | Spritzgießdüse | 511 | erste Ausnehmung |
| 31 | Materialrohr | 512 | zweite Ausnehmung |
| 311 | Befestigungsabschnitt | 513 | dritte Ausnehmung |
| 312 | Umfangsfläche | 514 | Seitenwand |
| 313 | Schaft | 514' | Seitenwand |
| 314 | Werkzeugaufnahme | 515 | Materialrohrhülle |
| 315 | Eingriffsausnehmung | 516 | Verbindungsstück |
| 316 | Eingriffsöffnung | 517 | Heizelementaufnahme |
| 317 | Mitnahmeelement | 52 | Heizelement |
| 318 | Kraftübertragungsfläche | 54 | Elektrischer Anschluss |
| 319 | Außenumfangsfläche | | |
| | | 70 | Verteiler |
| 32 | Strömungskanal | 71 | erste Verteilerplatte |
| 33 | Einlassöffnung | 72 | zweite Verteilerplatte |
| 34 | Auslassöffnung | 74 | erste Umlenkebene |
| 35 | Düsenspitze | 75 | zweite Umlenkebene |
| 36 | Sicherungsring | | |
| 38 | Schraube | 80 | Werkzeug |
| | | 81 | Eingriffabschnitt |
| 40 | Reihenanordnung | 811 | Eingriffelement |
| 41 | erste Reihe | 812 | Schlitz |
| 42 | zweite Reihe | 82 | Betätigungsabschnitt |
| 45 | Ringanordnung | 83 | Werkzeugschaft |
| 92 | Dichtabschnitt | DW1 | Außendurchmesser Eingriffabschnitt |
| a | Abstand | DW2 | Außendurchmesser Werkzeugschaft |
| L | Längsachse | | |
| M | Mittelachse | DW3 | Außendurchmesser Betätigungsabschnitt |
| R | radiale Richtung | | |
| U | Umfangsrichtung | IW2 | Innendurchmesser Werkzeugschaft |
| DM1 | Außendurchmesser Werkzeugaufnahme | | |
| | | LM1 | Länge Schaft |
| DM2 | Außendurchmesser Schaft | LW1 | Länge Werkzeugschaft |
| DM3 | Außendurchmesser Befestigungsabschnitt | | |

## Patentansprüche

1. Materialrohr (31) für eine Spritzgießdüse (30),
a) mit einem zumindest abschnittsweise entlang einer Längsachse (L) des Materialrohrs (31) verlaufenden Strömungskanal (32),
b) mit einer Einlassöffnung (33) und einer Auslassöffnung (34) für den Strömungskanal (32),
c) mit einem im Bereich der Einlassöffnung (33) ausgebildeten Befestigungsabschnitt (311) zum Befestigen des Materialrohrs (31) in einem Spritzgießwerkzeug,
d) mit einer im Bereich der Einlassöffnung (33) und des Befestigungsabschnitts (311) ausgebildeten Werkzeugaufnahme (314) zum Ansetzen eines Werkzeugs (80), und
e) mit einem sich von der Werkzeugaufnahme (314) bis zur Auslassöffnung (34) erstreckenden Schaft (313), wobei der Schaft (313) eine Umfangsfläche (312) aufweist,
**dadurch gekennzeichnet,**
f) **dass** die Werkzeugaufnahme (314) wenigstens ein Mitnahmeelement (317) und eine Außenumfangsfläche (319) aufweist, und
g) **dass** das Mitnahmeelement (317) zumindest eine Kraftübertragungsfläche (318) für das Werkzeug (80) aufweist,
h) wobei die Außenumfangsfläche (319) der Werkzeugaufnahme (314) in einem Abstand (a) radial zur Umfangsfläche (312) des Schafts (313) angeordnet ist, und
i) wobei die Kraftübertragungsfläche (318) des Mitnahmeelements (317) im Bereich zwischen der Außenumfangsfläche (319) der Werkzeugaufnahme (314) und der Umfangsfläche (312) des Schafts (313) ausgebildet ist.

2. Materialrohr (31) nach Anspruch 1, **dadurch gekennzeichnet, dass** der Außendurchmesser (DM1) der Werkzeugaufnahme (314) größer ist als der Außendurchmesser (DM2) des Schafts (313).

3. Materialrohr (31) nach einem der Ansprüche 1 oder 2, **dadurch gekennzeichnet, dass** der Außendurchmesser (DM3) des Befestigungsabschnitts (311) kleiner ist als der Außendurchmesser (DM2) des Schafts (313).

4. Materialrohr (31) nach einem der vorhergehenden Ansprüche, **dadurch gekennzeichnet, dass** der Befestigungsabschnitt (311) zwischen der Einlassöffnung (33) und der Werkzeugaufnahme (314) ausgebildet ist.

5. Materialrohr (31) nach einem der vorhergehenden Ansprüche, **dadurch gekennzeichnet, dass** die Werkzeugaufnahme (314) zumindest eine Eingriffsausnehmung (315) für das Werkzeug (80) aufweist, wobei jede Eingriffsausnehmung (315) axial über eine Eingriffsöffnung (316) für das Werkzeug (80) zugänglich ist.

6. Materialrohr (31) nach Anspruch 5, **dadurch gekennzeichnet, dass** jede Eingriffsausnehmung (315) von zumindest einer Kraftübertragungsfläche (318) begrenzt ist.

7. Materialrohr (31) nach einem der Ansprüche 5 oder 6, **dadurch gekennzeichnet, dass** die Eingriffsausnehmungen (315) zwischen je zwei Mitnahmeelementen (317) ausgebildet sind.

8. Materialrohr (31) nach einem der Ansprüche 5 bis 7, **dadurch gekennzeichnet, dass** die Eingriffsausnehmungen (315) als Nuten, Sicken, Vertiefungen oder Bohrungen ausgebildet sind.

9. Materialrohr (31) nach einem der Ansprüche 5 bis 8, **dadurch gekennzeichnet, dass** die Eingriffsausnehmungen (315) über den Umfang des Materialrohrs (31) verteilt angeordnet sind.

10. Spritzgießdüse (30) mit einem Materialrohr (31) nach einem der Ansprüche 1 bis 9 und mit einer Heizvorrichtung (50).

11. Spritzgießdüse nach Anspruch 10, wobei die Heizvorrichtung (50) von der Seite der Auslassöffnung (34) axial in Richtung der Längsachse (L) auf den Schaft (313) des Materialrohrs (31) aufgeschoben ist.

12. Spritzgießdüsenanordnung (10) für ein Spritzgießwerkzeug, mit einer Düsenhalterung (20), an der wenigstens eine Spritzgießdüse (30) nach Anspruch 10 angeordnet ist, wobei der Befestigungsabschnitt (311) des Materialrohrs (31) mit einem Befestigungsmittel (251) der Düsenhalterung (20) in Eingriff steht.

13. Spritzgießdüsenanordnung nach Anspruch 12, wobei der Abstand zwischen den Längsachsen (L) zweier benachbarter Spritzgießdüsen (30) im Wesentlichen gleich dem Außendurchmesser (DM1) der Werkzeugaufnahme (314) ist.

14. Spritzgießdüsenanordnung nach Anspruch 12 oder 13, wobei wenigstens drei Spritzgießdüsen (30) gegeneinander versetzt angeordnet sind, wobei die Seitenwände (515, 515') benachbarter Spritzgießdüsen (30) einander formangepasst sind.

15. System umfassend ein Materialrohr (31) nach einem der Ansprüche 1 bis 9 und ein Werkzeug (80) zur Montage oder Demontage des Materialrohrs (31) an einer Düsenhalterung (20) einer Spritzgießdüsenanordnung (10), wobei das Werkzeug (80) folgende Merkmale aufweist:
■ einen Eingriffabschnitt (81) für den Eingriff des Werkzeugs (80) in die Mitnahmeelemente (317) der Werkzeugaufnahme (314) am Materialrohr (31),
■ einen Betätigungsabschnitt (82) zum Ausüben eines Drehmoments auf das Werkzeug (80), und
■ einen zwischen dem Eingriffabschnitt (81) und dem Betätigungsabschnitt (82) angeordneten rohrförmigen Werkzeugschaft (83),
wobei der Innendurchmesser (lW2) des Werkzeugschafts (83) bis auf ein geringes Bewegungsspiel dem Schaft-Außendurchmesser (DM2) des Materialrohrs (31) entspricht, während der Außendurchmesser (DW1) des Eingriffabschnitts (81) und der Außendurchmesser (DW2) des Werkzeugschafts (83) kleiner oder gleich dem Außendurchmesser (DM1) der Werkzeugaufnahme (314) am Materialrohr (31) sind.

16. System nach Anspruch 15, wobei der Eingriffabschnitt (81) des Werkzeugs (80) Eingriffelemente (811) aufweist, die mit den Ausnehmungen (315) der Werkzeugaufnahme (314) am Materialrohr (31) korrespondieren.

## Claims

1. Material tube (31) for an injection moulding nozzle (30)
a) having a flow channel (32) that extends at least in parts along a longitudinal axis (L) of the material tube (31),
b) having an inlet opening (33) and an outlet opening (34) for the flow channel (32),
c) having a fixing portion (311) formed in the region of the inlet opening (33), for fixing the material tube (31) in an injection moulding tool,
d) having a tool receptacle (314) for the attachment of a tool (80) formed in the region of the inlet opening (33) and the fixing portion (311), and
e) having a shaft (313) that extends from the tool receptacle (314) to the outlet opening (34), the shaft (313) having a circumferential surface (312),
**characterised in that**
f) the tool receptacle (314) comprises at least one follower element (317) and an outer circumferential surface (319), and
g) the follower element (317) comprises at least one force transmission surface (318) for the tool (80),
h) the outer circumferential surface (319) of the tool receptacle (314) being arranged at a spacing (a) radially with respect to the circumferential surface (312) of the shaft (313), and
i) the force transmission surface (318) of the follower element (317) being formed in the region between the outer circumferential surface (319) of the tool receptacle (314) and the circumferential surface (312) of the shaft (313).

2. Material tube (31) according to claim 1, **characterised in that** the outer diameter (DM1) of the tool receptacle (314) is greater than the outer diameter (DM2) of the shaft (313).

3. Material tube (31) according to one of claims 1 or 2, **characterised in that** the outer diameter (DM3) of the fixing portion (311) is smaller than the outer diameter (DM2) of the shaft (313).

4. Material tube (31) according to one of the preceding claims, **characterised in that** the fixing portion (311) is formed between the inlet opening (33) and the tool receptacle (314).

5. Material tube (31) according to one of the preceding claims, **characterised in that** the tool receptacle (314) comprises at least one engagement recess (315) for the tool (80), each engagement recess (315) being axially accessible through an engagement opening (316) for the tool (80).

6. Material tube (31) according to claim 5, **characterised in that** each engagement recess (315) is delimited by at least one force transmission surface (318).

7. Material tube (31) according to one of claims 5 or 6, **characterised in that** the engagement recesses (315) are formed between two follower elements (317).

8. Material tube (31) according to one of claims 5 to 7, **characterised in that** the engagement recesses (315) are embodied as grooves, beads, depressions or bores.

9. Material tube (31) according to one of claims 5 to 8, **characterised in that** the engagement recesses (315) are arranged to be distributed over the circumference of the material tube (31).

10. Injection moulding nozzle (30) having a material tube (31) according to one of claims 1 to 9 and having a heater (50).

11. Injection moulding nozzle according to claim 10, wherein the heater (50) is pushed axially from the side of the outlet opening (34) onto the shaft (313) of the material tube (31) in the direction of the longitudinal axis (L).

12. Injection moulding nozzle assembly (10) for an injection moulding tool, having a nozzle holder (20) on which is mounted at least one injection moulding nozzle (30) according to claim 10, the fixing portion (311) of the material tube (31) engaging with a fixing means (251) of the nozzle holder (20).

13. Injection moulding nozzle assembly according to claim 12, wherein the distance between the longitudinal axes (L) of two adjacent injection moulding nozzles (30) is substantially equal to the outer diameter (DM1) of the tool receptacle (314).

14. Injection moulding nozzle assembly according to claim 12 or 13, wherein at least three injection moulding nozzles (30) are arranged offset from one another, the side walls (515, 515') of adjacent injection moulding nozzles (30) being adapted to fit one another's shape.

15. System comprising a material tube (31) according to one of claims 1 to 9 and a tool (80) for mounting the material tube (31) on a nozzle holder (20) of an injection moulding nozzle assembly (10) or for removing said material tube (31) therefrom, the tool (80) having the following features:
○ an engagement portion (81) for the engagement of the tool (80) in the follower elements (317) of the tool receptacle (314) on the material tube (31),
○ an actuating portion (82) for exerting a torque on the tool (80), and
○ a tubular tool shaft (83) arranged between the engagement portion (81) and the actuating portion (82),
the inner diameter (IW2) of the tool shaft (83) corresponding to the outer shaft diameter (DM2) of the material tube (31), apart from a slight clearance for movement, the outer diameter (DW1) of the engagement portion (81) and the outer diameter (DW2) of the tool shaft (83) being smaller than or equal to the outer diameter (DM1) of the tool receptacle (314) on the material tube (31).

16. System according to claim 15, wherein the engagement portion (81) of the tool (80) comprises engagement elements (811) which correspond to the recesses (315) of the tool receptacle (314) on the material tube (31).

## Revendications

1. Tuyau de matériau (31) pour une buse de moulage par injection (30), comprenant
a) un canal d'écoulement (32) s'étendant au moins par endroits le long d'un axe longitudinal (L) du tuyau de matériau (31),
b) un orifice d'admission (33) et un orifice d'évacuation (34) pour le canal d'écoulement (32),
c) une section de fixation (311) réalisée dans la zone de l'orifice d'admission (33), servant à fixer le tuyau de matériau (31) dans un outil de moulage par injection,
d) un porte-outil (314) réalisé dans la zone de l'orifice d'admission (33) et de la section de fixation (311), servant à recevoir un outil (80), et
e) une tige (313) s'étendant du porte-outil (314) jusqu'à l'orifice d'évacuation (34), la tige (313) présentant une surface périphérique (312),
**caractérisé en ce que**
f) le porte-outil (314) présente au moins un élément d'entraînement (317) et une surface périphérique extérieure (319), et
g) l'élément d'entraînement (317) présente au moins une surface de transmission de force (318) pour l'outil (80),
h) la surface périphérique extérieure (319) du porte-ouil (314) étant disposée à une certaine distance (a) radialement par rapport à la surface périphérique (312) de la tige (313), et
i) la surface de transmission de force (318) de l'élément d'entraînement (317) étant réalisée dans la zone entre la surface périphérique extérieure (319) du porte-ouil (314) et la surface périphérique (312) de la tige (313).

2. Tuyau de matériau (31) selon la revendication 1, **caractérisé en ce que** le diamètre extérieur (DM1) du porte-outil (314) est plus grand que le diamètre extérieur (DM2) de la tige (313).

3. Tuyau de matériau (31) selon l'une quelconque des revendications 1 ou 2, **caractérisé en ce que** le diamètre extérieur (DM3) de la section de fixation (311) est plus petit que le diamètre extérieur (DM2) de la tige (313).

4. Tuyau de matériau (31) selon l'une quelconque des revendications précédentes, **caractérisé en ce que** la section de fixation (311) est réalisée entre l'orifice d'admission (33) et le porte-outil (314).

5. Tuyau de matériau (31) selon l'une quelconque des revendications précédentes, **caractérisé en ce que** le porte-outil (314) présente au moins un évidement d'engrènement (315) pour l'outil (80), chaque évidement d'engrènement (315) étant accessible axialement par l'intermédiaire d'un orifice d'engrènement (316) pour l'outil (80).

6. Tuyau de matériau (31) selon la revendication 5, **caractérisé en ce que** chaque évidement d'engrènement (315) est délimité par au moins une surface de transmission de force (318).

7. Tuyau de matériau (31) selon l'une quelconque des revendications 5 ou 6, **caractérisé en ce que** les évidements d'engrènement (315) sont réalisés entre respectivement deux éléments d'entraînement (317).

8. Tuyau de matériau (31) selon l'une quelconque des revendications 5 à 7, **caractérisé en ce que** les évidements d'engrènement (315) sont réalisés sous la forme de rainures, de moulures, de renfoncements ou d'alésages.

9. Tuyau de matériau (31) selon l'une quelconque des revendications 5 à 8, **caractérisé en ce que** les évidements d'engrènement (315) sont disposés de manière répartie sur la périphérie du tuyau de matériau (31).

10. Buse de moulage par injection (30) comprenant un tuyau de matériau (31) selon l'une quelconque des revendications 1 à 9 et comprenant un dispositif de chauffage (50).

11. Buse de moulage par injection selon la revendication 10, le dispositif de chauffage (50) étant enfilé depuis le côté de l'orifice d'évacuation (34) de manière axiale en direction de l'axe longitudinal (L) sur la tige (313) du tuyau de matériau (31).

12. Ensemble de buses de moulage par injection (10) pour un outil de moulage par injection, comprenant un système de maintien de buse (20), au niveau duquel est disposée au moins une buse de moulage par injection (30) selon la revendication 10, la section de fixation (311) du tuyau de matériau (31) étant en prise avec un moyen de fixation (251) du système de maintien de buse (20).

13. Ensemble de buses de moulage par injection selon la revendication 12, la distance entre les axes longitudinaux (L) des deux buses de moulage par injection (30) adjacentes étant essentiellement égale au diamètre extérieur (DM1) du porte-outil (314).

14. Ensemble de buses de moulage par injection selon la revendication 12 ou 13, au moins trois buses de moulage par injection (30) étant disposées de manière décalée les unes par rapport aux autres, les formes des parois latérales (515, 515') des buses de moulage par injection (30) adjacentes étant adaptées les unes aux autres.

15. Système comprenant un tuyau de matériau (31) selon l'une quelconque des revendications 1 à 9 et un outil (80) servant au montage ou au démontage du tuyau de matériau (31) au niveau d'un système de maintien de buse (20) d'un ensemble de buses de moulage par injection (10), l'outil (80) présentant les caractéristiques suivantes :
- une section d'engrènement (81) pour l'engrènement de l'outil (80) avec les éléments d'entraînement (317) du porte-outil (314) au niveau du tuyau de matériau (31),
- une section d'actionnement (82) servant à exercer un couple de rotation sur l'outil (80), et
- une tige d'outil (83) tubulaire disposée entre la section d'engrènement (81) et la section d'actionnement (82),
le diamètre intérieur (IW2) de la tige d'outil (83) correspondant jusqu'à un jeu de mouvement infime au diamètre extérieur de tige (DM2) du tuyau de matériau (31), tandis que le diamètre extérieur (DW1) de la section d'engrènement (81) et le diamètre extérieur (DW2) de la tige d'outil (83) sont inférieurs ou identiques au diamètre extérieur (DM1) du porte-outil (314) au niveau du tuyau de matériau (31).

16. Système selon la revendication 15, la section d'engrènement (81) de l'outil (80) présentant des éléments d'engrènement (811), qui correspondent aux évidements (315) du porte-outil (314) au niveau du tuyau de matériau (31).
